# EUROPEAN PATENT APPLICATION

(11) **EP 3 896 611 A1**
(43) Date of publication of application: **20.10.2021**
(21) Application number: 19896168.2
(22) Date of filing: 11.12.2019
(51) Int. Cl.: G06K 9/62, G06K 9/46

(54) **INFORMATION PREDICTION METHOD, MODEL TRAINING METHOD AND SERVER**

(30) Priority: 13.12.2018 CN 201811526060
(71) Applicant: TENCENT TECHNOLOGY (SHENZHEN) COMPANY LIMITED, Shenzhen, Guangdong 518057 (CN)
(72) Inventor: LI, Hongliang, Shenzhen, Guangdong 518057 (CN); WANG, Liang, Shenzhen, Guangdong 518057 (CN); SHI, Tengfei, Shenzhen, Guangdong 518057 (CN); YUAN, Bo, Shenzhen, Guangdong 518057 (CN); YANG, Shaojie, Shenzhen, Guangdong 518057 (CN); YU, Hongsheng, Shenzhen, Guangdong 518057 (CN); YIN, Yinyuting, Shenzhen, Guangdong 518057 (CN)
(74) Representative: Eisenführ Speiser
(86) International application number: PCT/CN2019/124681
(87) International publication number: WO 2020/119737

(57) **Abstract**

Disclosed are an information prediction method, a model training method and a server. The information prediction method comprises: acquiring an image to be predicted (101); extracting a set of features to be predicted from the image to be predicted, wherein the set of features to be predicted comprises a first feature to be predicted, a second feature to be predicted and a third feature to be predicted, the first feature to be predicted represents an image feature of a first area, the second feature to be predicted represents an image feature of a second area, the third feature to be predicted represents an attribute feature related to an interactive operation, and the range of the first area is smaller than the range of the second area (102); and acquiring, by means of a target joint model, a first tag and/or a second tag corresponding to the set of features to be predicted, wherein the first tag represents a tag related to operation content, and the second tag represents a tag related to an operation intention (103). Micro control and a view of the overall situation can be predicted merely by using a joint model, thereby effectively solving the problem of a hard handover in a hierarchical model and improving the convenience of prediction.

## Description

This application claims priority to Chinese Patent Application No. 201811526060.1, entitled "INFORMATION PREDICTION METHOD, MODEL TRAINING METHOD AND SERVER" filed on December 13, 2018, which is incorporated herein by reference in its entirety.

### FIELD OF THE TECHNOLOGY

The present disclosure relates to the field of artificial intelligence (AI) technologies, and in particular, to an information prediction method, a model training method, and a server.

### BACKGROUND OF THE DISCLOSURE

AI programs have defeated top professional players in board games having clear rules. Compared with board games, multiplayer online battle arena (MOBA) games are more complex and are closer to a scene in a real word. The researching in AI problems in the MOBA games helps to explore and resolve complex problems in the real world.

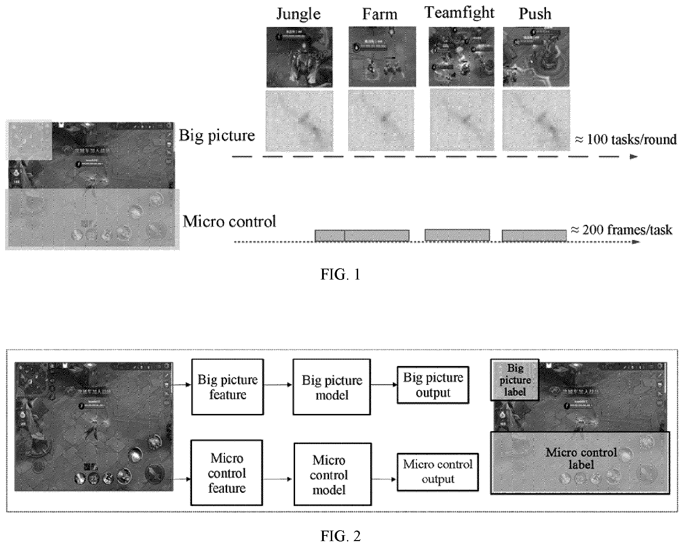

Regarding the complexity of the operations of the MOBA games, operations in a whole MOBA game may generally be classified into two types, namely, big picture operations and micro control operations, to reduce a complexity degree of the whole MOBA game. Referring to FIG. 1, FIG. 1 is a schematic diagram of creating a model hierarchically in the related art. As shown in FIG. 1, dividing according to big picture decisions such as "jungle", "farm", "teamfight" and "push", each round of game may have approximately 100 big picture tasks on average, and each big picture task may have approximately 200 micro control decisions on average. Based on the above, referring to FIG. 2, FIG. 2 is a schematic structural diagram of a hierarchical model in the related art. As shown in FIG. 2, a big picture model is established by using big picture features, and a micro control model is established by using micro control features. A big picture label may be outputted by using the big picture model, and a micro control label may be outputted by using the micro control model.

However, the big picture model and the micro control model need to be designed and trained respectively in the hierarchical modeling. That is, the two models are independent to each other. In an actual application, it is always needed to decide which of the two models is to be selected for prediction. Therefore, there is a problem of hard switching between the two models, which is inconvenience for prediction.

### SUMMARY

Embodiments of the present disclosure provide an information prediction method, a model training method, and a server, to predict micro control and a big picture by using only one combined model, thereby effectively resolving a hard switching problem in a hierarchical model and improving the convenience of prediction.

In view of this, a first aspect of the present disclosure provides an information prediction method, including: obtaining a to-be-predicted image; extracting a to-be-predicted feature set from the to-be-predicted image, the to-be-predicted feature set including a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region; and
obtaining, by using a target combined model, at least one of a first label corresponding to the to-be-predicted feature set and a second label corresponding to the to-be-predicted feature set, the first label being related to operation content, and the second label being related to an operation intention.

A second aspect of the present disclosure provides a model training method, including: obtaining a to-be-used training image set, the to-be-used training image set including N to-be-used training images, N being an integer greater than or equal to 1; extracting a to-be-used training feature set from each of the to-be-used training images, the to-be-used training feature set including a first to-be-used training feature, a second to-be-used training feature, and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region; obtaining a first to-be-used training label and a second to-be-used training label for each of the to-be-used training images, the first to-be-used training label being related to operation content, and the second to-be-used training label being related to an operation intention; and obtaining a target combined model through training by the to-be-used training feature set of each of the to-be-used training images and the first to-be-used training label and the second to-be-used training label that correspond to each of the to-be-used training images.

A third aspect of the present disclosure provides a server, including:
an obtaining module, configured to obtain a to-be-predicted image; and
an extraction module, configured to extract a to-be-predicted feature set from the to-be-predicted image obtained by the obtaining module, the to-be-predicted feature set including a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region,
the obtaining module being further configured to obtain, by using a target combined model, a first label and a second label that correspond to the to-be-predicted feature set extracted by the extraction module, the first label being related to operation content, and the second label being related to an operation intention.

In a possible design, in a first implementation of the third aspect of the embodiments of the present disclosure, the obtaining module is configured to obtain, by using the target combined model, the first label, the second label, and a third label corresponding to the to-be-predicted feature set, the third label being related to a result of victory or defeat.

A fourth aspect of the present disclosure provides a server, including:
an obtaining module, configured to obtain a to-be-used training image set, the to-be-used training image set including N to-be-used training images, N being an integer greater than or equal to 1;
an extraction module, configured to extract a to-be-used training feature set from each of the to-be-used training images obtained by the obtaining module, the to-be-used training feature set including a first to-be-used training feature, a second to-be-used training feature, and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region,
the obtaining module being configured to obtain a first to-be-used training label and a second to-be-used training label for each of the to-be-used training images, the first to-be-used training label being related to operation content, and the second to-be-used training label being related to an operation intention; and
a training module, configured to obtain a target combined model through training by the to-be-used training feature set extracted by the extraction module from each of the to-be-used training images and the first to-be-used training label and the second to-be-used training label that are obtained by the obtaining module for each of the to-be-used training images.

In a possible design, in a first implementation of the fourth aspect of the embodiments of the present disclosure,
the first to-be-used training feature is a two-dimensional vector feature, and the first to-be-used training feature includes at least one of character position information, moving object position information, fixed object position information, and defensive object position information in the first region;
the second to-be-used training feature is a two-dimensional vector feature, and the second to-be-used training feature includes at least one of character position information, moving object position information, fixed object position information, defensive object position information, obstacle object position information, and output object position information in the second region;
the third to-be-used training feature is a one-dimensional vector feature, and the first to-be-used training feature includes at least one of a character hit point value, a character output value, time information, and score information; and the first to-be-used training feature, the second to-be-used training feature, and the third to-be-used training feature correspond to each other.

In a possible design, in a second implementation of the fourth aspect of the embodiments of the present disclosure,
the first to-be-used training label includes at least one of button type information and button parameter information; and
the button parameter information includes at least one of a direction parameter, a position parameter, and a target parameter, the direction parameter being used for representing a moving direction of a character, the position parameter being used for representing a position of the character, and the target parameter being used for representing a target of an output of the character.

In a possible design, in a third implementation of the fourth aspect of the present disclosure, the second to-be-used training label includes operation intention information and character position information; and the operation intention information represents an intention with which a character interacts with an object, and the character position information represents a position of the character in the first region.

In a possible design, in a fourth implementation of the fourth aspect of the embodiments of the present disclosure, the training module is configured to process the to-be-used training feature set of each of the to-be-used training images to obtain a target feature set, the target feature set including a first target feature, a second target feature, and a third target feature;
obtain a first predicted label and a second predicted label that correspond to the target feature set by using a long short-term memory, LSTM, layer, the first predicted label being a predicted label related to the operation content, and the second predicted label being a predicted label related to the operation intention;
obtain a model core parameter through training by the first predicted label, the first to-be-used training label, the second predicted label and the second to-be-used training label of each of the to-be-used training images, both the first predicted label and the second predicted label being of predicted values, and both the first to-be-used training label and the second to-be-used training label being of actual values; and
generate the target combined model according to the model core parameter.

In a possible design, in a fifth implementation of the fourth aspect of the embodiments of the present disclosure, the training module is configured to
process the third to-be-used training feature of each of the to-be-used training images by using a fully connected layer to obtain the third target feature, the third target feature being a one-dimensional vector feature;
process the second to-be-used training feature of each of the to-be-used training images by using a convolutional layer to obtain the second target feature, the second target feature being a one-dimensional vector feature; and
process the first to-be-used training feature of each of the to-be-used training images by using the convolutional layer to obtain the first target feature, the first target feature being a one-dimensional vector feature.

In a possible design, in a sixth implementation of the fourth aspect of the embodiments of the present disclosure, the training module is configured to
obtain the first predicted label, the second predicted label and a third predicted label that correspond to the target feature set by using the LSTM layer, the third predicted label being a predicted label related to a result of victory or defeat;
obtain a third to-be-used training label for each of the to-be-used training images, the third to-be-used training label being used for representing an actual result of victory or defeat; and
obtain the model core parameter through training by the first predicted label, the first to-be-used training label, the second predicted label, the second to-be-used training label, the third predicted label and the third to-be-used training label, the third to-be-used training label being of a predicted value, and the third predicted label being of an actual value.

In a possible design, in a seventh implementation of the fourth aspect of the embodiments of the present disclosure, the server further includes an update module;
the obtaining module is further configured to obtain a to-be-used training video after the training module obtains the target combined model through training by the to-be-used training feature set of each of the to-be-used training images and the first to-be-used training label and the second to-be-used training label that correspond to each of the to-be-used training images, the to-be-used training video includes multiple frames of interaction images;
the obtaining module is further configured to obtain target scene data corresponding to the to-be-used training video by using the target combined model, the target scene data including data of a target scene;
the training module is further configured to obtain a target model parameter through training by the target scene data, the first to-be-used training label and the first predicted label that are obtained by the obtaining module, the first predicted label being a predicted label related to the operation content, the first predicted label being of a predicted value, and the first to-be-used training label being of an actual value; and
the update module is configured to update the target combined model by using the target model parameter that is obtained by the training module, to obtain a reinforced combined model.

In a possible design, in an eighth implementation of the fourth aspect of the embodiments of the present disclosure, the server further includes an update module;
the obtaining module is further configured to obtain a to-be-used training video after the training module obtains the target combined model through training by the to-be-used training feature set of each of the to-be-used training images and the first to-be-used training label and the second to-be-used training label that correspond to each of the to-be-used training images, the to-be-used training video includes multiple frames of interaction images;
the obtaining module is further configured to obtain target scene data corresponding to the to-be-used training video by using the target combined model, the target scene data including data of a target scene;
the training module is further configured to obtain a target model parameter through training by the target scene data, the second to-be-used training label and the second predicted label that are obtained by the obtaining module, the second predicted label being a predicted label related to the operation intention, the second predicted label being of a predicted value, and the second to-be-used training label being of an actual value; and
the update module is configured to update the target combined model by using the target model parameter that is obtained by the training module, to obtain a reinforced combined model.

A fifth aspect of the present disclosure provides a server, the communication device being configured to perform the information prediction method according to the first aspect or any possible implementation of the first aspect. Specifically, the server may include modules configured to perform the information prediction method according to the first aspect or any possible implementation of the first aspect.

A sixth aspect of the present disclosure provides a server, the communication device being configured to perform the model training method according to the second aspect or any possible implementation of the second aspect. For example, the server may include modules configured to perform the model training method according to the second aspect or any possible implementation of the second aspect.

A seventh aspect of the present disclosure provides a computer-readable storage medium, the computer-readable storage medium storing instructions, the instructions, when run on a computer, causing the computer to perform the method according to any one of the foregoing aspects.

An eighth aspect of the present disclosure provides a computer program (product), the computer program (product) including computer program code, the computer program code, when executed by a computer, causing the computer to perform the method according to any one of the foregoing aspects.

As can be seen from the foregoing technical solutions, the embodiments of the present disclosure have at least the following advantages.

In the embodiments of the present disclosure, an information prediction method is provided. First, a server obtains a to-be-predicted image. Then the server extracts a to-be-predicted feature set from the to-be-predicted image, where the to-be-predicted feature set includes a first to-be-predicted feature, a second to-be-predicted feature and a third to-be-predicted feature. The first to-be-predicted feature represents an image feature of a first region, the second to-be-predicted feature represents an image feature of a second region, and the third to-be-predicted feature represents an attribute feature related to an interaction operation. The range of the first region is smaller than the range of the second region. Finally, the server may obtain, by using a target combined model, a first label and a second label that correspond to the to-be-predicted image, where the first label is a label related to operation content, and the second label is a label related to an operation intention. With the foregoing method, micro control and a big picture may be predicted by using only one combined model, where a prediction result of the micro control is represented as the first label, and a prediction result of the big picture is represented as the second label. Therefore, a big picture model and a micro control model are merged into one combined model, thereby effectively resolving a hard switching problem in a hierarchical model and improving the convenience of prediction.

### BRIEF DESCRIPTION OF THE DRAWINGS

FIG. 1 is a schematic diagram of creating a model hierarchically in the related art.
FIG. 2 is a schematic structural diagram of a hierarchical model in the related art.
FIG. 3 is a schematic architectural diagram of an information prediction system according to an embodiment of the present disclosure.
FIG. 4 is a schematic diagram of a system structure of a target combined model according to an embodiment of the present disclosure.
FIG. 5 is a schematic diagram of an information prediction method according to an embodiment of the present disclosure.
FIG. 6 is a schematic diagram of a work flow of a reinforced combined model according to an embodiment of the present disclosure.
FIG. 7 is a schematic diagram of a model training method according to an embodiment of the present disclosure.
FIG. 8 is a schematic diagram of extracting a to-be-used training feature set according to an embodiment of the present disclosure.
FIG. 9 is a schematic diagram of a feature expression of a to-be-used training feature set according to an embodiment of the present disclosure.
FIG. 10 is a schematic diagram of an image-like feature expression according to an embodiment of the present disclosure.
FIG. 11 is a schematic diagram of a micro control label according to an embodiment of the present disclosure.
FIG. 12 is another schematic diagram of a micro control label according to an embodiment of the present disclosure.
FIG. 13 is another schematic diagram of a micro control label according to an embodiment of the present disclosure.
FIG. 14 is another schematic diagram of a micro control label according to an embodiment of the present disclosure.
FIG. 15 is a schematic diagram of a big picture label according to an embodiment of the present disclosure.
FIG. 16 is a schematic diagram of a network structure of a target combined model according to an embodiment of the present disclosure.
FIG. 17 is a schematic diagram of a system structure of a reinforced combined model according to an embodiment of the present disclosure.
FIG. 18 is a schematic diagram of another system structure of a reinforced combined model according to an embodiment of the present disclosure.
FIG. 19 is a schematic diagram of a server according to an embodiment of the present disclosure.
FIG. 20 is a schematic diagram of a server according to another embodiment of the present disclosure.
FIG. 21 is a schematic diagram of a server according to another embodiment of the present disclosure.
FIG. 22 is a schematic structural diagram of a server according to an embodiment of the present disclosure.

### DESCRIPTION OF EMBODIMENTS

Embodiments of the present disclosure provide an information prediction method, a model training method, and a server, to predict micro control and a big picture by using only one combined model, thereby effectively resolving a hard switching problem in a hierarchical model and improving the convenience of prediction.

In the specification, claims, and accompanying drawings of the present disclosure, the terms "first", "second", "third", "fourth", and the like (if existing) are intended to distinguish between similar objects rather than describe a specific sequence or a precedence order. It may be understood that the data termed in such a way is interchangeable in proper circumstances, so that the embodiments of the present disclosure described herein, for example, can be implemented in other sequences than the sequence illustrated or described herein. Moreover, the terms "comprise", "include" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It is to be understood that models in the present disclosure are applicable to the field of AI, including, but not limited to, machine translation, intelligent control, expert systems, robots, language and image understanding, automatic programming, aerospace application, processing, storage and management of massive information, and the like. For ease of introduction, introduction is made by using an online game scene as an example in the present disclosure, and the online game scene may be a scene of a MOBA game. For the MOBA game, an AI model is designed in the embodiments of the present disclosure, which can better simulate behaviors of a human player, having better effects in human-computer battles, simulating a disconnected player, and practicing a player in a game. The MOBA game is typically played in a multiplayer versus multiplayer mode. That is, two (or more) teams with same number of players compete against each other, where each player controls a hero character, and the party that first pushes the "Nexus" base of the opponent down is a winner.

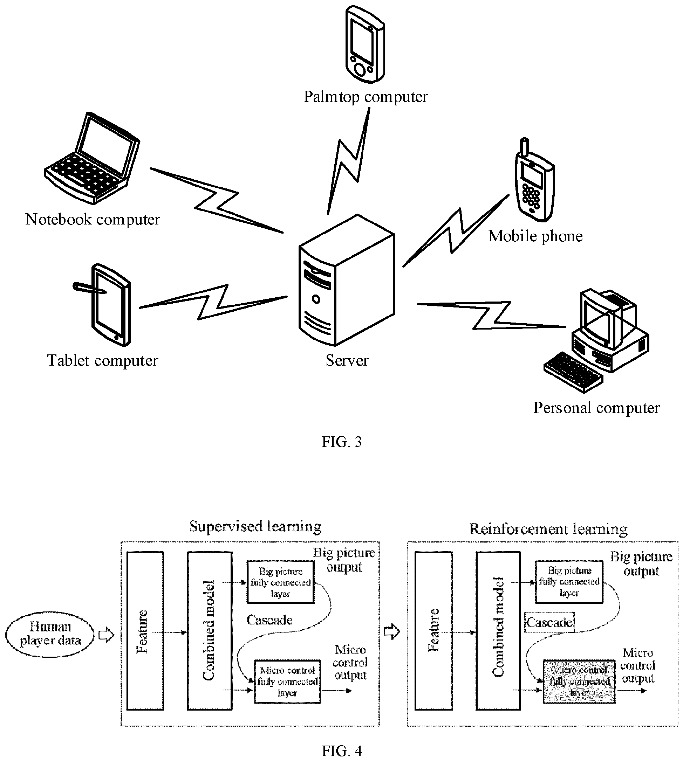

For ease of understanding, the present disclosure provides an information prediction method, and the method is applicable to an information prediction system shown in FIG. 3. Referring to FIG. 3, FIG. 3 is a schematic architectural diagram of an information prediction system according to an embodiment of the present disclosure. As shown in FIG. 3, multiple rounds of games are played on clients, so that a large amount of game screen data (that is, images to be used for training) is generated, and then sent to a server. The game screen data may be data generated by human players in an actual game playing process, or may be data obtained by a machine simulating operations of human players. In the present disclosure, the game screen data is mainly provided by human players. In an example that a round of game spends 30 minutes on average and each second includes 15 frames, each round of game generates 27000 frames of images on average. In the present disclosure, the training is performed mainly using data related to big picture tasks and micro control tasks, in order to reduce complexity of data. The big picture tasks are classified according to operation intentions, which include, but are not limited to, "jungle", "farm", "teamfight", and "push". In each round of game, there are only approximately 100 big picture tasks on average, and each big picture task includes approximately 200 micro control decisions. Therefore, both the number of steps of big picture decision and the number of steps of micro control decision fall within an acceptable range.

The server trains a model by using the game screen data reported by the clients to obtain a target combined model, and further generates a reinforced combined model based on the target combined model. For ease of introduction, referring to FIG. 4, FIG. 4 is a schematic diagram of a system structure of a reinforced combined model according to an embodiment of the present disclosure. As shown in FIG. 4, the model training process may be divided into two stages. First an initial combined model of big picture and micro control operations is learned from game data of human players through supervised learning, and a big picture full connection (FC) layer and a micro control FC layer are added to the combined model, to obtain a target combined model. Then, the micro control FC layer (or the big picture FC layer) is optimized through reinforcement learning, while parameters of the other layer are maintained fixed, to improve core indicators, such as a hit rate and a dodge rate, in "teamfight".

The client is deployed on a terminal device. The terminal device includes, but is not limited to, a tablet computer, a notebook computer, a palmtop computer, a mobile phone, and a personal computer (PC).

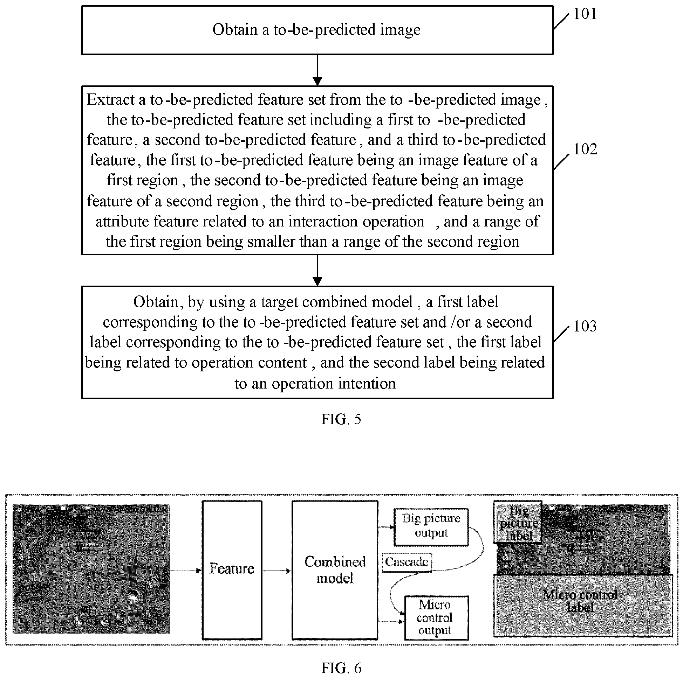

The information prediction method in the present disclosure is introduced below with reference to the foregoing introduction. Referring to FIG. 5, an embodiment of the information prediction method in the embodiments of the present disclosure includes the following steps 101 to 103.

In step 101, a to-be-predicted image is obtained.

In this embodiment, the server first obtains a to-be-predicted image, which may be an image in a MOBA game.

In 102, a to-be-predicted feature set is extracted from the to-be-predicted image, the to-be-predicted feature set including a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region.

In this embodiment, the server needs to extract a to-be-predicted feature set from the to-be-predicted image. The to-be-predicted feature set herein mainly includes three types of features, namely a first to-be-predicted feature, a second to-be-predicted feature, and a third to-be-predicted feature. The first to-be-predicted feature represents an image feature of a first region. For example, the first to-be-predicted feature is a minimap image-like feature in the MOBA game. The second to-be-predicted feature represents an image feature of a second region. For example, the second to-be-predicted feature is a current visual field image-like feature in the MOBA game. The third to-be-predicted feature represents an attribute feature related to an interaction operation. For example, the third to-be-predicted feature is a hero attribute vector feature in the MOBA game.

In step 103, by using a target combined model, at least one of a first label corresponding to the to-be-predicted feature set and a second label corresponding to the to-be-predicted feature set is obtained, the first label being related to operation content, and the second label being related to an operation intention.

In this embodiment, the server inputs the extracted to-be-predicted feature set into a target combined model. Further, the extracted to-be-predicted feature set may alternatively be inputted into a reinforced combined model. The reinforced combined model is a model obtained by reinforcing the target combined model. For ease of understanding, referring to FIG. 6, FIG. 6 is a schematic diagram of a work flow of a target combined model according to an embodiment of the present disclosure. As shown in FIG. 6, in the present disclosure, a big picture model and a micro control model are merged into a same model, that is, a combined model. A big picture FC layer and a micro control FC layer are added to the combined model to obtain the target combined model, to better match a decision process of human. The combined model is inputted with unified features, that is, the to-be-predicted feature set. A unified encoding layer is used to train the big picture tasks and micro control tasks at the same time. Output of the big picture tasks is inputted into an encoding layer of the micro control tasks in a cascaded manner. The combined model may finally only output the first label related to operation content to use output of the micro control FC layer as an execution instruction according to the first label. Alternatively, the combined model may only output the second label related to an operation intention to use output of the big picture FC layer as an execution instruction according to the second label. Alternatively, the combined model may output the first label and the second label at the same time, to use output of the micro control FC layer and output of the big picture FC layer as an execution instruction according to the first label and the second label at the same time.

In the embodiments of the present disclosure, an information prediction method is provided. A server first obtains a to-be-predicted image. The server then extracts a to-be-predicted feature set from the to-be-predicted image. The to-be-predicted feature set includes a first to-be-predicted feature, a second to-be-predicted feature, and a third to-be-predicted feature. The first to-be-predicted feature represents an image feature of a first region, the second to-be-predicted feature represents an image feature of a second region, the third to-be-predicted feature represents an attribute feature related to an interaction operation, and the range of the first region is smaller than the range of the second region. Finally, the server may obtain, by using a target combined model, a first label and a second label that correspond to the to-be-predicted image. The first label represents a label related to operation content, and the second label represents a label related to an operation intention. By the foregoing method, micro controls and a big picture can be predicted by using only one combined model, where a prediction result of the micro control is represented as the first label, and a prediction result of the big picture is represented as the second label. Therefore, a big picture model and a micro control model are merged into one combined model, thereby effectively resolving a hard switching problem in a hierarchical model and improving the convenience of prediction.

Optionally, based on the embodiment corresponding to FIG. 5, in a first optional embodiment of the information prediction method of the present disclosure, the obtaining, by using a target combined model, at least one of a first label corresponding to the to-be-predicted feature set and a second label corresponding to the to-be-predicted feature set may include: obtaining, by using the target combined model, a first label, a second label, and a third label corresponding to the to-be-predicted feature set, where the third label represents a label related to a result of victory or defeat.

In this embodiment, a relatively comprehensive prediction method is provided. That is, the first label, the second label, and the third label are all outputted by using the target combined model, so that not only operations under the big picture tasks and operations under the micro control tasks can be predicted, but also a result of victory or defeat can be predicted.

Optionally, in an actual application, multiple consecutive frames of to-be-predicted images are generally inputted, to improve the accuracy of prediction. For example, 100 frames of to-be-predicted images are inputted, and feature extraction is performed on each frame of to-be-predicted image, so that 100 to-be-predicted feature sets are obtained. The 100 to-be-predicted feature sets are inputted into the target combined model, to predict an implicit intention related to a big picture task, learn a general navigation capability, predict an execution instruction of a micro control task, and predict a possible result of victory or defeat of this round of game. For example, one may win this round of game or may lose this round of game.

In the embodiments of the present disclosure, the target combined model not only can output the first label and the second label, but also can further output the third label. That is, the target combined model can further predict a result of victory or defeat. With the foregoing method, in an actual application, a result of a situation may be better predicted, which helps to improve the reliability of prediction and improve the flexibility and practicability of prediction.

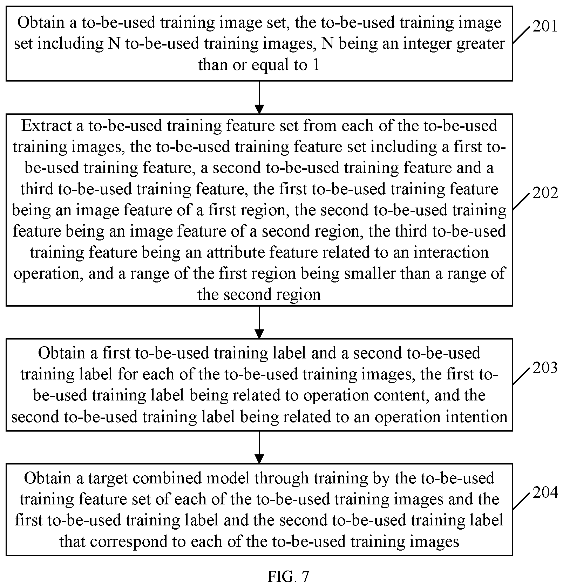

A model prediction method in the present disclosure is introduced below, where not only fast supervised learning is performed by using human data, but also prediction accuracy of a model can be improved by using reinforcement learning. Referring to FIG. 7, an embodiment of the model prediction method in the embodiments of the present disclosure includes the following steps 201 to 204.

In step 201, a to-be-used training image set is obtained, the to-be-used training image set including N to-be-used training images, N being an integer greater than or equal to 1.

In this embodiment, a process of model training is introduced. The server first obtains a to-be-used training image set according to human player game data reported by the clients. The to-be-used training image set generally includes multiple frames of images. That is, the to-be-used training image set includes N to-be-used training images to improve model precision, N being an integer greater than or equal to 1.

In step 202, a to-be-used training feature set is extracted from each to-be-used training image, the to-be-used training feature set including a first to-be-used training feature, a second to-be-used training feature, and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region.

In this embodiment, the server extracts a to-be-used training feature set of each to-be-used training image in the to-be-used training image set. The to-be-used training feature set mainly includes three types of features, namely the first to-be-used training feature, the second to-be-used training feature, and the third to-be-used training feature. The first to-be-used training feature represents an image feature of a first region. For example, the first to-be-used training feature is a minimap image-like feature in the MOBA game. The second to-be-used training feature represents an image feature of a second region. For example, the second to-be-used training feature is a current visual field image-like feature in the MOBA game. The third to-be-used training feature represents an attribute feature related to an interaction operation. For example, the third to-be-used training feature is a hero attribute vector feature in the MOBA game.

In step 203, a first to-be-used training label and a second to-be-used training label is obtained for each of the to-be-used training images, the first to-be-used training label being related to operation content, and the second to-be-used training label being related to an operation intention.

In this embodiment, the server further obtains a first to-be-used training label and a second to-be-used training label for each of the to-be-used training images. The first to-be-used training label represents a label related to the operation content. For example, the first to-be-used training label is a label related to a micro control task. The second to-be-used training label represents a label related to the operation intention. For example, the second to-be-used training label is a label related to a big picture task.

In an actual application, step 203 may be performed before step 202, or may be performed after step 202, or may be performed at the same time as step 202. This is not limited herein.

In step 204, a target combined model is obtained through training by the to-be-used training feature set of each to-be-used training image and the first to-be-used training label and the second to-be-used training label that correspond to each to-be-used training image.

In this embodiment, the server performs training using the to-be-used training feature set extracted from each to-be-used training image and the first to-be-used training label and the second to-be-used training label that correspond to each to-be-used training image, to obtain a target combined model. The target combined model may be used to predict a situation of a big picture task and an instruction of a micro control task.

In the embodiments of the present disclosure, a model training method is introduced. The server first obtains a to-be-used training image set, and then extracts a to-be-used training feature set from each to-be-used training image, where the to-be-used training feature set includes a first to-be-used training feature, a second to-be-used training feature, and a third to-be-used training feature. The server then obtains a first to-be-used training label and a second to-be-used training label corresponding to each to-be-used training image, and finally obtains the target combined model through training by the to-be-used training feature set of each to-be-used training image and the first to-be-used training label and the second to-be-used training label that correspond to each to-be-used training image. With the foregoing method, a model that can predict micro control and a big picture at the same time is designed. Therefore, the big picture model and the micro control model are merged into a combined model, thereby effectively resolving a hard switching problem in a hierarchical model and improving the convenience of prediction. In addition, the consideration of the big picture task may effectively improve the accuracy of macroscopic decision. The big picture decision is quite important in a MOBA game especially.

Optionally, based on the embodiment corresponding to FIG. 7, in a first optional embodiment of the model training method of the present disclosure, the first to-be-used training feature is a two-dimensional vector feature, and the first to-be-used training feature includes at least one of character position information, moving object position information, fixed object position information, and defensive object position information in the first region;
the second to-be-used training feature is a two-dimensional vector feature, and the second to-be-used training feature includes at least one of character position information, moving object position information, fixed object position information, defensive object position information, obstacle object position information, and output object position information in the second region;
the third to-be-used training feature is a one-dimensional vector feature, and the first to-be-used training feature includes at least one of a character hit point value, a character output value, time information, and score information; and
the first to-be-used training feature, the second to-be-used training feature, and the third to-be-used training feature correspond to each other.

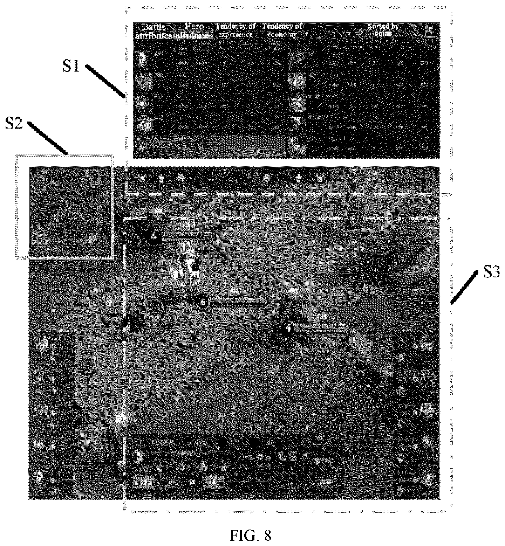

In this embodiment, the relationship between the first to-be-used training feature, the second to-be-used training feature, and the third to-be-used training feature and content thereof are introduced. For ease of introduction, description is made below by using a scene of a MOBA game as an example, where when a human player performs an operation, information of a minimap, a current visual field, and hero attributes, is comprehensively considered. Therefore, a multi-modality and multi-scale feature expression is used in the present disclosure. Referring to FIG. 8, FIG. 8 is a schematic diagram of extracting a to-be-used training feature set according to an embodiment of the present disclosure. As shown in FIG. 8, the part indicated by S 1 is hero attribute information, including hero characters in the game, and a hit point value, an attack damage value, an ability power value, an attack defense value, and a magic defense value of each hero character. A part indicated by S2 is a minimap, that is, the first region. In the minimap, positions of, for example, a hero character, a minion line, a monster, and a turret can be seen. The hero character includes a hero character controlled by a teammate and a hero character controlled by an opponent. The minion line refers to a position at which minions of both sides battle with each other. The monster refers to a "neutral and hostile" object other than players in an environment, which is a non-player character (NPC) monster, and is not controlled by a player. The turret refers to a defensive structure. The two parties each have a Nexus turret, and the part that destroys the Nexus turret of the opponent wins. A part indicated by S3 is a current visual field, that is, the second region. In the current visual field, heroes, minion lines, monsters, turrets, map obstacles, and bullets can be clearly seen.

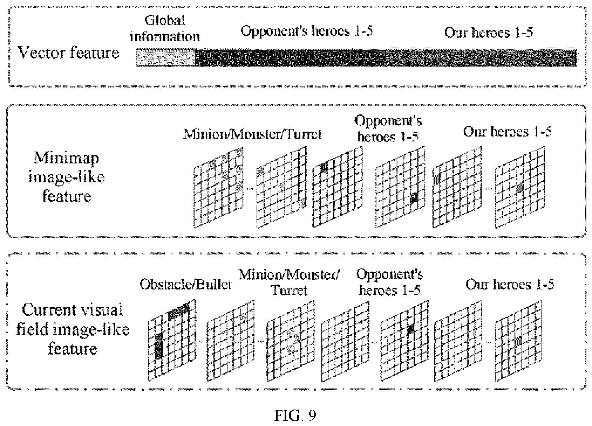

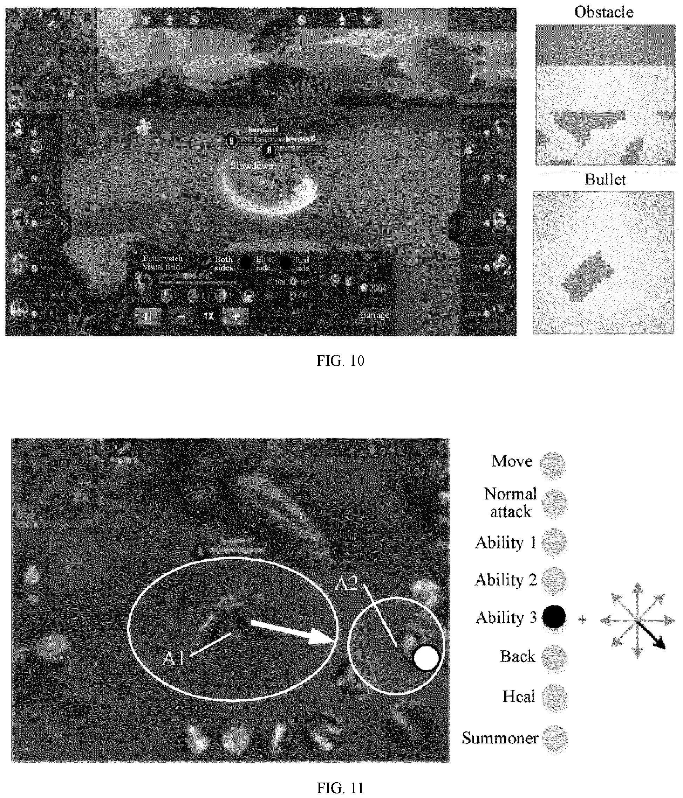

Referring to FIG. 9, FIG. 9 is a schematic diagram of a feature expression of a to-be-used training feature set according to an embodiment of the present disclosure. As shown in FIG. 9, a one-to-one mapping relationship between a hero attribute vector feature (that is, the third to-be-used training feature) and a minimap image-like feature (that is, the first to-be-used training feature), and a one-to-one mapping relationship between the hero attribute vector feature (that is, the third to-be-used training feature) and a current visual field image-like feature (that is, the second to-be-used training feature) are established, which can be used in both macroscopic decision making and microcosmic decision making. The hero attribute vector feature is a feature formed by numeric values, and therefore, is a one-dimensional vector feature. The vector feature includes, but is not limited to, attribute features of hero characters, for example hit points (that is, the hit point values of the opponent's five hero characters and the hit point values of five our hero characters), attack powers (that is, character output values of the five opponent's hero characters and character output values of the five our hero characters), a time (a duration of a round of game), and a score (a final score of each team). Both the minimap image-like feature and the current visual field image-like feature are image-like features. For ease of understanding, referring to FIG. 10, FIG. 10 is a schematic diagram of an image-like feature expression according to an embodiment of the present disclosure. As shown in FIG. 10, an image-like feature is a two-dimensional feature artificially constructed from an original pixel image, which reduces the difficulty of directly learning the original complex image. The minimap image-like feature includes position information of heroes, minion lines, monsters, turrets, and the like, and is used for representing macroscopic-scale information. The current visual field image-like feature includes position information of heroes, minion lines, monsters, turrets, map obstacles, and bullets, and is used for representing microscopic-scale local information.

Such a multi-modality and multi-scale feature simulating a human viewing angle not only can better model a spatial relative position relationship, but also is quite suitable for expressing a high-dimensional feature in the MOBA game.

In the embodiments of the present disclosure, content of the three to-be-used training features is also introduced, where the first to-be-used training feature is a two-dimensional vector feature, the second to-be-used training feature is a two-dimensional vector feature, and the third to-be-used training feature is a one-dimensional vector feature. With the foregoing manners, on one hand, specific information included in the three to-be-used training features may be determined, which provides more information for model training. On the other hand, both the first to-be-used training feature and the second to-be-used training feature are two-dimensional vector features, which help to improve a spatial expression of the feature, thereby improving diversity of the feature.

Optionally, based on the embodiment corresponding to FIG. 7, in a second optional embodiment of the model training method of the present disclosure, the first to-be-used training label includes at least one of button type information and button parameter information.

The button parameter information includes at least one of a direction parameter, a position parameter, and a target parameter, the direction parameter being used for representing a moving direction of a character, the position parameter being used for representing a position of the character, and the target parameter being used for representing a target of an output of the character.

In this embodiment, content of the first to-be-used training label is introduced in detail. The first to-be-used training label includes at least one of button type information and button parameter information. Generally, both the button type information and the button parameter information are used as the first to-be-used training label, to improve accuracy of the label. When a human player performs an operation, the human player generally first determines a button to be used and then determines an operation parameter of the button. Therefore, in the present disclosure, a hierarchical label is designed. That is, a button to be used at a current moment is predicted first, and an output parameter of the button is then predicted.

For ease of understanding, the following introduces the first to-be-used training label by using examples with reference to the accompanying drawings. The button parameter information mainly includes three types of information, namely, direction information, position information, and target information. A round of a circle is 360 degrees. Assuming that a label is set every 6 degrees, the direction information may be discretized into information of 60 directions. A hero character generally occupies 1000 pixels in an image, so that the position information may be discretized into information of 30 × 30 positions. In addition, the target information represents a candidate attack target, which may be an object to be attacked by an ability of a hero character.

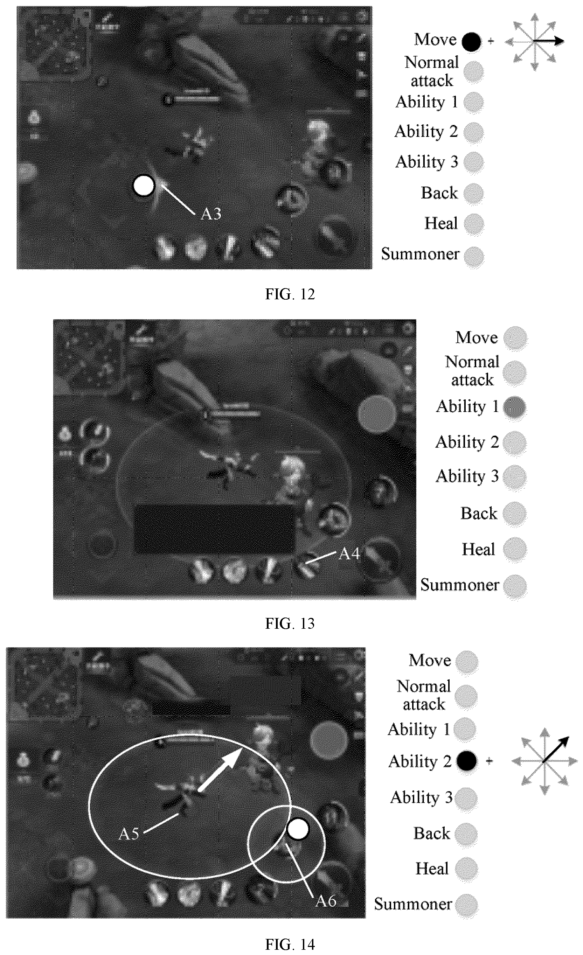

Referring to FIG. 11, FIG. 11 is a schematic diagram of a micro control label according to an embodiment of the present disclosure. As shown in FIG. 11, a hero character casts ability 3 within the range shown by A1, in an ability direction of 45 degrees to the bottom right. A2 indicates a position of the ability 3 in an operation interface. Therefore, the operation of the human player is represented as "ability 3 + direction". Referring to FIG. 12, FIG. 12 is another schematic diagram of a micro control label according to an embodiment of the present disclosure. As shown in FIG. 12, the hero character moves along a direction shown by A3, and the moving direction is the right direction. Therefore, the operation of the human player is represented as "move + direction". Referring to FIG. 13, FIG. 13 is another schematic diagram of a micro control label according to an embodiment of the present disclosure. As shown in FIG. 13, the hero character casts ability 1, and A4 indicates a position of the ability 1 in an operation interface. Therefore, the operation of the human player is represented as "ability 1". Referring to FIG. 14, FIG. 14 is another schematic diagram of a micro control label according to an embodiment of the present disclosure. As shown in FIG. 14, a hero character casts ability 2 within the range shown by A5, in an ability direction of 45 degree to the top right. A6 indicates a position of the ability 2 in an operation interface. Therefore, the operation of the human player is represented as "ability 2 + direction".

AI may predict abilities of different output types, that is, AI may predict a direction for a direction button, predict a position for a position button, and predict a specific target for a target button. The hierarchical label design is closer to a real operation intention of the human player in a game process, which is more helpful for AI learning.

In the embodiments of the present disclosure, it is described that the first to-be-used training label includes at least one of the button type information and the button parameter information, where the button parameter information includes at least one of a direction parameter, a position parameter, and a target parameter, the direction parameter being used for representing a moving direction of a character, the position parameter being used for representing a position of the character, and the target parameter being used for representing a target of an output of the character. With the foregoing method, content of the first to-be-used training label is further refined, and labels are established in a hierarchical manner, which may be closer to the real operation intention of the human player in the game process, thereby helping to improve a learning capability of AI.

Optionally, based on the embodiment corresponding to FIG. 7, in a third optional embodiment of the model training method of the present disclosure, the second to-be-used training label includes operation intention information and character position information.

The operation intention information represents an intention with which a character interacts with an object, and the character position information represents a position of the character in the first region.

In this embodiment, content included in the second to-be-used training label is introduced in detail. The second to-be-used training label includes the operation intention information and the character position information. In an actual application, the human player performs big picture decisions according to a current game state, for example, farming a minion line in the top lane, killing monsters in our jungle, participating in a teamfight in the middle lane, and pushing a turret in the bottom lane. Different from micro control that corresponds to specific operation buttons, the big picture decisions are implicit intentions reflected in player data.

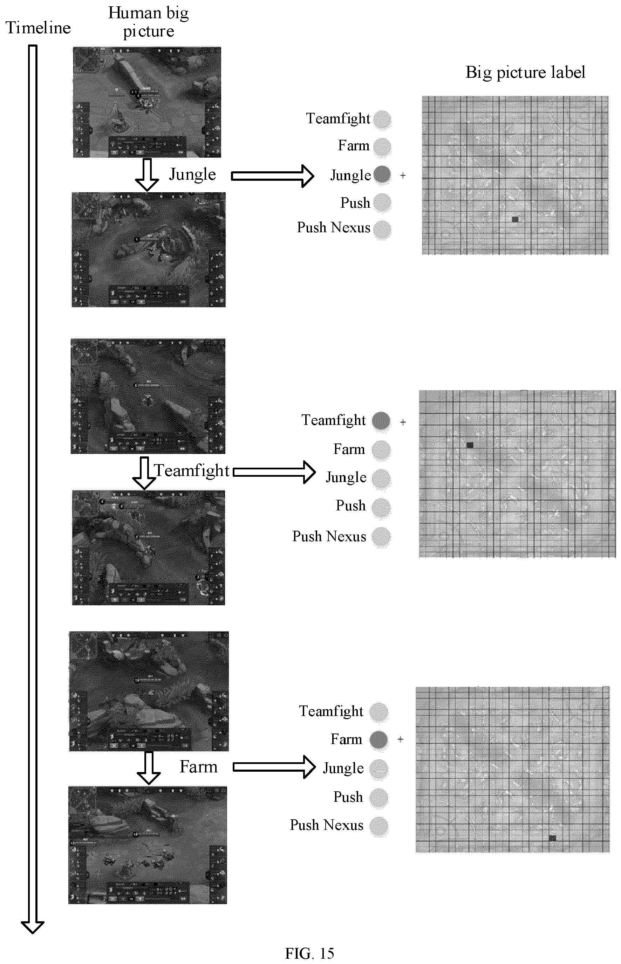

For ease of understanding, referring to FIG. 15, FIG. 15 is a schematic diagram of a big picture label according to an embodiment of the present disclosure. For example, a human big picture and a corresponding big picture label (the second to-be-used training label) are obtained according to a change with a timeline. A video of a round of battle of a human player may be divided into scenes such as "teamfight", "farm", "jungle", and "push", and operation intention information of a big picture intention of the player may be expressed by modeling the scenes. The minimap is discretized into 24*24 blocks, and the character position information represents a block in which a character is located in a next attack. As shown in FIG. 15, the second to-be-used training label is operation intention information + character position information, which is represented as "jungle + coordinates A", "teamfight + coordinates B", and "farm + coordinates C" respectively.

In the embodiments of the present disclosure, it is described that the second to-be-used training label includes the operation intention information and the character position information, where the operation intention information represents an intention with which a character interacts with an object, and the character position information represents a position of the character in the first region. With the foregoing method, the big picture of the human player is reflected by the operation intention information in combination with the character position information, so that feasibility and operability of the solution are improved, because the big picture decision is quite important in a MOBA game.

Optionally, based on the embodiment corresponding to FIG. 7, in a fourth optional embodiment of the model training method of the present disclosure, the obtaining a target combined model through training by the to-be-used training feature set of each to-be-used training image and the first to-be-used training label and the second to-be-used training label that correspond to each to-be-used training image may include the following steps:
processing the to-be-used training feature set of each to-be-used training image to obtain a target feature set, the target feature set including a first target feature, a second target feature, and a third target feature;
obtaining a first predicted label and a second predicted label that correspond to the target feature set by using an LSTM layer, the first predicted label being a predicted label related to the operation content, and the second predicted label being a predicted label related to the operation intention;
obtaining a model core parameter through training by the first predicted label, the first to-be-used training label, the second predicted label, and the second to-be-used training label of each to-be-used training image, both the first predicted label and the second predicted label being of predicted values, and both the first to-be-used training label and the second to-be-used training label being of actual values; and
generating the target combined model according to the model core parameter.

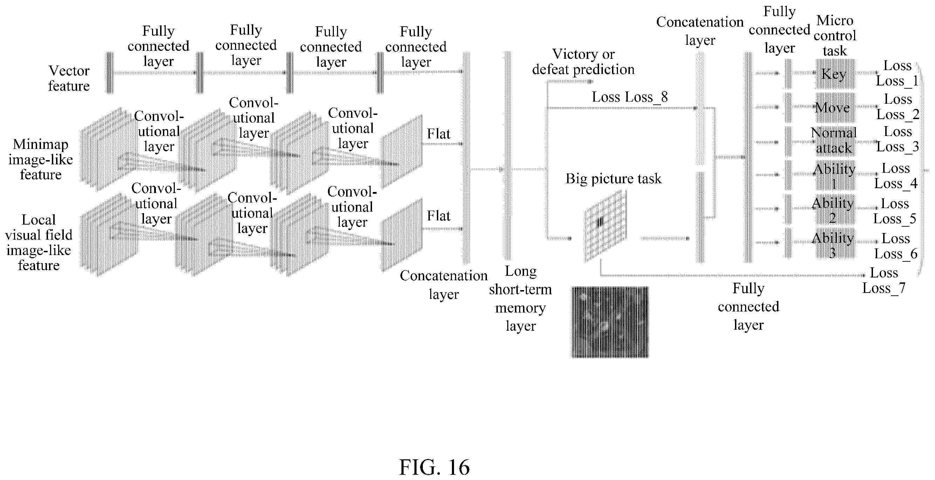

In this embodiment, a general process of obtaining the target combined model through training is introduced. For ease of understanding, referring to FIG. 16, FIG. 16 is a schematic diagram of a network structure of a target combined model according to an embodiment of the present disclosure. As shown in FIG. 16, the input to a model is a to-be-used training feature set of a current frame of to-be-used training image, and the to-be-used training feature set includes a minimap image-like feature (the first to-be-used training feature), a current visual field image-like feature (the second to-be-used training feature), and a hero character vector feature (the third to-be-used training feature). The image-like features are encoded through a convolutional network respectively, and the vector feature is encoded through a fully connected network, to obtain a target feature set. The target feature set includes a first target feature, a second target feature, and a third target feature. The first target feature is obtained by processing the first to-be-used training feature, the second target feature is obtained by processing the second to-be-used training feature, and the third target feature is obtained by processing the third to-be-used training feature. The target feature set then forms a public encoding layer through concatenation. The encoding layer is inputted into an LSTM network layer. The LSTM network layer is mainly used for resolving a problem of partial visibility of a visual field of a hero.

An LSTM network is a time recurrent neural network and is suitable for processing and predicting important events at a relatively long interval and latency in time series. The LSTM network differs from a recurrent neural network (RNN) mainly in that the LSTM has a processor used to determine whether information is useful. A structure of the processor is referred to as a unit. The unit has three doors, which are respectively referred to as an input gate, a forget gate, and an output gate. When a piece of information enters the LSTM network layer, whether the information is useful may be determined according to a rule. Only information that succeeds in algorithm authentication is retained, and information that fails in algorithm authentication is forgotten through the forget gate. The LSTM is an effective technology to resolve a long-term dependency problem and has quite high universality. For a MOBA game, there may be a problem of an invisible visual field. That is, a hero character on our side may only observe opponent's heroes, monsters, and minion lines around our units (for example, hero characters of teammates), and cannot observe an opponent's unit at another position, and an opponent's hero may shield oneself from a visual field by hiding in a bush or using a stealth ability. In this case, in order to ensure the information integrity in model training, the hidden information needs to be restored by using the LSTM network layer.

A first predicted label and a second predicted label of the frame of to-be-used training image may be obtained based on an output result of the LSTM layer. A first to-be-used training label and a second to-be-used training label of the frame of to-be-used training image are determined according to a manually labeled result. In this case, a minimum value between the first predicted label and the first to-be-used training label can be obtained by using a loss function, and a minimum value between the second predicted label and the second to-be-used training label is obtained by using the loss function. The model core parameter is determined under the condition of the minimum values. The model core parameter includes model parameters for micro control tasks (for example, a button, move, a normal attack, ability 1, ability 2, and ability 3) and model parameters for big picture tasks. The target combined model is generated according to the model core parameter.

It may be understood that each output task may be calculated independently, that is, a fully connected network parameter of an output layer of each task is related to only the task. The target combined model includes secondary tasks used for predicting a big picture position and intention, and output of the big picture task is outputted to an encoding layer of a micro control task in a cascaded form.

The loss function is used for estimating an inconsistency degree between a predicted value and an actual value of a model and is a non-negative real-valued function. A smaller loss function indicates greater robustness of the model. The loss function is a core part of both an empirical risk function and a structural risk function. Commonly used loss functions include, but are not limited to, a hinge loss, a cross entropy loss, a square loss, and an exponential loss.

In the embodiments of the present disclosure, a process of obtaining the target combined model through training is provided, which mainly includes processing the to-be-used training feature set of each to-be-used training image to obtain the target feature set, then obtaining the first predicted label and the second predicted label that correspond to the target feature set by using the LSTM layer, and then obtaining the model core parameter through training using the first predicted label, the first to-be-used training label, the second predicted label, and the second to-be-used training label of each to-be-used training image. The model core parameter is used for generating the target combined model. With the foregoing method, the problem that some visual fields are unobservable may be resolved by using the LSTM layer. That is, the LSTM layer may obtain data in a previous period of time, so that the data is more complete, which helps to make inference and decision in the process of model training.

Optionally, based on the fourth embodiment corresponding to FIG. 7, in a fifth optional embodiment of the model training method of the present disclosure, the processing the to-be-used training feature set of each to-be-used training image to obtain a target feature set may include the following steps: processing the third to-be-used training feature of each to-be-used training image by using an FC layer to obtain a third target feature, the third target feature being a one-dimensional vector feature; processing the second to-be-used training feature of each to-be-used training image by using a convolutional layer to obtain a second target feature, the second target feature being a one-dimensional vector feature; and processing the first to-be-used training feature of each to-be-used training image by using the convolutional layer to obtain a first target feature, the first target feature being a one-dimensional vector feature.

In this embodiment, how to process the to-be-used training feature set of each frame of to-be-used training image that is inputted to the model is introduced. The to-be-used training feature set includes a minimap image-like feature (the first to-be-used training feature), a current visual field image-like feature (the second to-be-used training feature), and a hero character vector feature (the third to-be-used training feature). For example, the third to-be-used training feature is processed by inputting the third to-be-used training feature into the FC layer and obtaining the third target feature outputted by the FC layer. A function of the FC layer is to map a distributed feature expression to a sample labeling space. Each node of the FC layer is connected to all nodes of a previous layer to integrate the previously extracted features. Due to the characteristic of fully connection, usually the number of parameters of the FC layer is the greatest.

The first to-be-used training feature and the second to-be-used training feature are processed by inputting the two features into the convolutional layer respectively, to output the first target feature corresponding to the first to-be-used training feature and the second target feature corresponding to the second to-be-used training feature by using the convolutional layer. The convolutional layer can flat an original image. For image data, a pixel is greatly related to data of pixels around it. If processed by the full connection network, correlation of pixels in an image may be easily ignored, or two irrelevant pixels may be forcibly associated. Therefore, convolution processing needs to be performed on the image data. Assuming that the image corresponding to the first to-be-used training feature has 10 × 10 pixels, the first target feature obtained through the convolutional layer is a 100-dimensional vector feature. Assuming that the image corresponding to the second to-be-used training feature has 10 × 10 pixels, the second target feature obtained through the convolutional layer is a 100-dimensional vector feature. Assuming that the third target feature corresponding to the third to-be-used training feature is a 10-dimensional vector feature, a 210-dimensional (100+100+10) vector feature may be obtained through a concatenation (concat) layer.

In the embodiments of the present disclosure, the to-be-used training feature set may be further processed. That is, the first to-be-used training feature of each to-be-used training image is processed by using the FC layer to obtain the first target feature. The second to-be-used training feature of each to-be-used training image is processed by using the convolutional layer to obtain the second target feature. The third to-be-used training feature of each to-be-used training image is processed by using the convolutional layer to obtain the third target feature. With the foregoing method, all features are obtained as one-dimensional vector features, and concatenation processing may be performed on the vector features for subsequent model training, thereby helping to improve feasibility and operability of the solution.

Optionally, based on the fourth embodiment corresponding to FIG. 7, in a sixth optional embodiment of the model training method of the present disclosure, the obtaining a first predicted label and a second predicted label that correspond to the target feature set by using an LSTM layer may include:
obtaining a first predicted label, a second predicted label, and a third predicted label that correspond to the target feature set by using the LSTM layer, the third predicted label being a predicted label related to a result of victory or defeat; and
the obtaining a model core parameter through training by the first predicted label, the first to-be-used training label, the second predicted label, and the second to-be-used training label of each to-be-used training image includes:
   obtaining a third to-be-used training label for each of the to-be-used training image, the third to-be-used training label being used for representing an actual result of victory or defeat; and
   obtaining the model core parameter through training by the first predicted label, the first to-be-used training label, the second predicted label, the second to-be-used training label, the third predicted label, and the third to-be-used training label, the third to-be-used training label being of a predicted value, and the third predicted label being of an actual value.

In this embodiment, it is further introduced that the target combined model may further predict a result of victory or defeat. For example, based on the fourth embodiment corresponding to FIG. 7, a third to-be-used training label of the frame of to-be-used training image may be obtained based on an output result of the LSTM layer. The third to-be-used training label and the third to-be-used training label of the frame of to-be-used training image are determined according to a manually labeled result. In this case, a minimum value between the third predicted label and the third to-be-used training label may be obtained by using a loss function, and the model core parameter is determined under the condition of the minimum value. In this case, the model core parameter not only includes model parameters for micro control tasks (for example, button, move, normal attack, ability 1, ability 2, and ability 3) and model parameters for big picture tasks, but also includes model parameters for tasks of predicting victory or defeat,. The target combined model is finally generated according to the model core parameter.

In the embodiments of the present disclosure, it is described that the target combined model may be further trained by a label related to a result of victory or defeat. That is, the server obtains, by using the LSTM layer, the first predicted label, the second predicted label, and the third predicted label that correspond to the target feature set, where the third predicted label represents a label that is obtained through prediction and that is related to a result of victory or defeat. Then the server obtains the third to-be-used training label for each of the to-be-used training images, and finally obtains the model core parameter through training by the first predicted label, the first to-be-used training label, the second predicted label, the second to-be-used training label, the third predicted label, and the third to-be-used training label. With the foregoing method, the target combined model may further predict a winning percentage of a match. Therefore, the learning of a situation may be reinforced, thereby improving reliability and diversity of model application.

Optionally, based on FIG. 7 and any one of the first embodiment to the sixth embodiment corresponding to FIG. 7, in a seventh optional embodiment of the model training method of the present disclosure, after the obtaining a target combined model through training by the to-be-used training feature set of each to-be-used training image and the first to-be-used training label and the second to-be-used training label that correspond to each to-be-used training image, the method may further include:
obtaining a to-be-used training video, the to-be-used training video including multiple frames of interaction images;
obtaining target scene data corresponding to the to-be-used training video by using the target combined model, the target scene data including data of a target scene;
obtaining a target model parameter through training by the target scene data, the first to-be-used training label and the first predicted label, the first predicted label being a predicted label related to the operation content, the first predicted label being of a predicted value, and the first to-be-used training label being of an actual value; and
updating the target combined model by using the target model parameter, to obtain a reinforced combined model.

In this embodiment, because there are a large number of MOBA game players, a large amount of data from human players may be used for supervised learning and training, thereby simulating human operations by the model. However, there may be a misoperation due to various factors such as nervousness or inattention of a human. The misoperation may include a deviation in an ability casting direction or not dodging an opponent's ability in time, leading to bad samples in training data. In view of this, the present disclosure may optimize some task layers in the target combined model through reinforcement learning. For example, reinforcement learning is only performed on the micro control FC layer and not performed on the big picture FC layer.

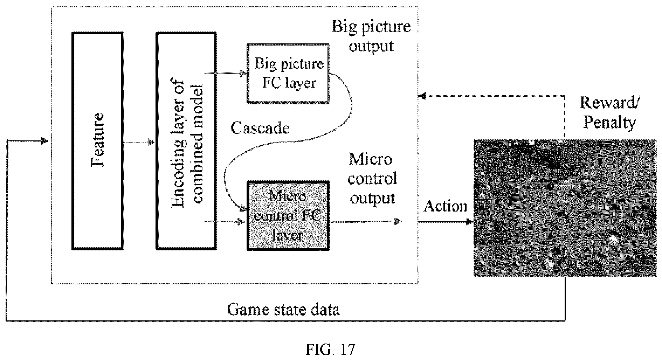

For ease of understanding, referring to FIG. 17, FIG. 17 is a schematic diagram of a system structure of a reinforced combined model according to an embodiment of the present disclosure. As shown in FIG. 17, the target combined model includes a combined model, a big picture FC layer, and a micro control FC layer. Core model parameters of an encoding layer in the combined model and core model parameters of the big picture FC layer are obtained through supervised learning. In a process of reinforcement learning, the core model parameters in the encoding layer in the combined model and the big picture FC layer are maintained unchanged. Therefore, the feature expression does not need to be learned during reinforcement learning, thereby accelerating convergence of reinforcement learning. A number of steps of decisions of a micro control task in a teamfight scene is 100 on average (approximately 20 seconds), which effectively reduce the number of steps of decisions. Key capabilities, such as the ability hit rate and dodging an opponent's ability, of AI can be improved by reinforcing the micro control FC layer. The micro control FC layer is trained by a reinforcement learning algorithm, which may be specifically a proximal policy optimization (PPO) algorithm.

The following introduces a process of reinforcement learning.
Step 1. After the target combined model is obtained through training, the server may load the target combined model obtained through supervised learning, fix the encoding layer of the combined model and the big picture FC layer, and loads a game environment.
Step 2. A to-be-used training video is obtained. The to-be-used training video includes multiple frames of interaction images. Teamfight processing is performed from a start frame in the to-be-used training video by using the target combined model, and target scene data of a hero teamfight scene is stored. The target scene data may include features, actions, a reward signal, and probability distribution outputted by a combined model network. The features are the hero attribute vector feature, the minimap image-like feature, and the current visual field image-like feature. The actions are buttons used by the player in controlling a hero character. The reward signal is a number of times that a hero character attacks opponent's hero characters in a teamfight process. The probability distribution outputted by the combined model network may be represented as a distribution probability of each label in a micro control task. For example, a distribution probability of a label 1 is 0.1, a distribution probability of a label 2 is 0.3, and a distribution probability of a label 3 is 0.6.
Step 3. A target model parameter is obtained through training by the target scene data, the first to-be-used training label and the first predicted label, and the core model parameters in the target combined model is updated by using the PPO algorithm. Only the model parameter of the micro control FC layer is updated. That is, an updated model parameter is generated according to the first to-be-used training label and the first predicted label. Both the first to-be-used training label and the first predicted label are labels related to the micro control task.
Step 4. If a maximum number of frames of iterations is not reached after the processing of step 2 to step 4 is performed on each frame of image in the to-be-used training video, the updated target combined model is sent to a battle environment and the process returns to step 2. Step 5 is performed if the maximum number of frames of iterations is reached. The maximum number of frames of iterations may be set based on experience, or may be set based on scenes. This is not limited in the embodiments of the present disclosure.
Step 5. A reinforced combined model obtained by the reinforcement is saved.

Further, in the embodiments of the present disclosure, some task layers in the target combined model may be further optimized through reinforcement learning. If a part of the micro control task needs to be reinforced, the server obtains the to-be-used training video. The server then obtains the target scene data corresponding to the to-be-used training video by using the target combined model, and obtains the target model parameter through training based on the target scene data, the first to-be-used training label, and the first predicted label. Finally, the server updates the target combined model by using the target model parameter to obtain the reinforced combined model. With the foregoing method, AI capabilities may be improved by reinforcing the micro control FC layer. In addition, reinforcement learning may further overcome misoperation problems caused by various factors such as nervousness or inattention of a human, thereby greatly reducing a number of bad samples in training data, and further improving reliability of the model and accuracy of prediction using the model. The reinforcement learning method may be performed only for some scenes, to reduce the number of steps of decisions and accelerate convergence.

Optionally, based on FIG. 7 and any one of the first embodiment to the sixth embodiment corresponding to FIG. 7, in an eighth optional embodiment of the model training method of the present disclosure, after the obtaining a target combined model through training by the to-be-used training feature set of each to-be-used training image and the first to-be-used training label and the second to-be-used training label that correspond to each to-be-used training image, the method may further include:
obtaining a to-be-used training video, the to-be-used training video including multiple frames of interaction images;
obtaining target scene data corresponding to the to-be-used training video by using the target combined model, the target scene data including data of a target scene;
obtaining a target model parameter through training by the target scene data, the second to-be-used training label, and the second predicted label, the second predicted label being a predicted label related to the operation intention, the second predicted label being of a predicted value, and the second to-be-used training label being of an actual value; and
updating the target combined model by using the target model parameter, to obtain a reinforced combined model.

In this embodiment, because there are a large number of MOBA game players, a large amount of data from human players may be generally used for supervised learning and training, thereby simulating human operations by the model. However, there may be a misoperation due to various factors such as nervousness or inattention of a human. The misoperation may include a deviation in an ability casting direction or not dodging an opponent's ability in time, leading to bad samples in training data. In view of this, the present disclosure may optimize some task layers in the target combined model through reinforcement learning. For example, reinforcement learning is only performed on the big picture FC layer and not performed on the micro control FC layer.

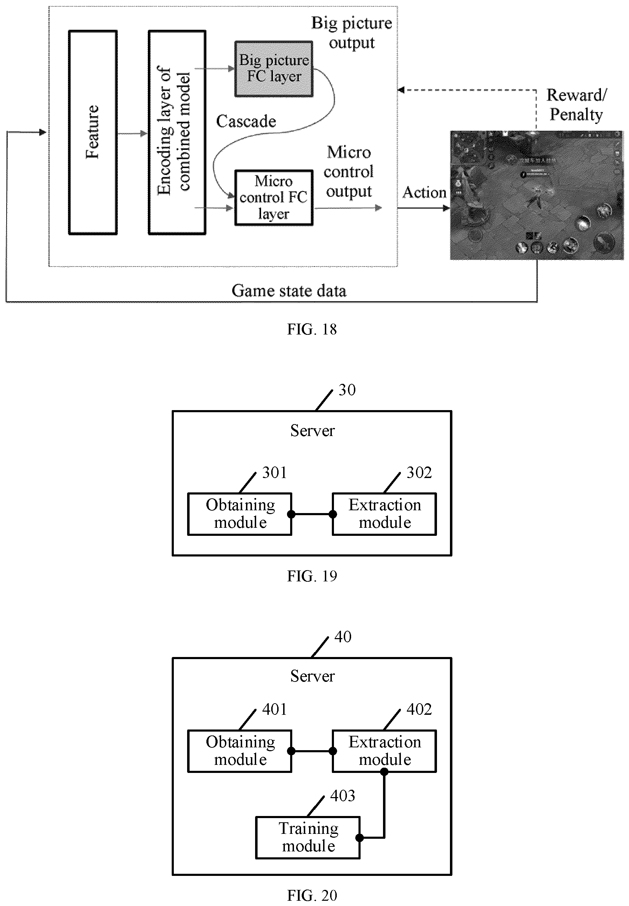

For ease of understanding, referring to FIG. 18, FIG. 18 is another schematic diagram of a system structure of a reinforced combined model according to an embodiment of the present disclosure. As shown in FIG. 18, the target combined model includes a combined model, a big picture FC layer, and a micro control FC layer. Core model parameters of an encoding layer in the combined model and core model parameters of the micro control FC layer are obtained through supervised learning. In a process of reinforcement learning, the core model parameters in the encoding layer in the combined model and the micro control FC layer are maintained unchanged. Therefore, the feature expression does not need to be learned during reinforcement learning, thereby accelerating convergence of reinforcement learning. A macroscopic decision-making capability of AI may be improved by reinforcing the big picture FC layer. The big picture FC layer performs training by using a reinforcement learning algorithm, and the algorithm may be the PPO algorithm or an Actor-Critic algorithm.

The following introduces a process of reinforcement learning.
Step 1. After the target combined model is obtained through training, the server may load the target combined model obtained through supervised learning, fix the encoding layer of the combined model and the micro control FC layer, and loads a game environment.
Step 2. A to-be-used training video is obtained. The to-be-used training video includes multiple frames of interaction images. Teamfight processing is performed from a start frame in the to-be-used training video by using the target combined model, and target scene data of a hero teamfight scene is stored. The target scene data may include data in scenes such as "jungle", "farm", "teamfight", and "push".
Step 3. A target model parameter is obtained through training by the target scene data, the second to-be-used training label, and the second predicted label, and the core model parameters in the target combined model is updated by using the Actor-Critic algorithm. Only the model parameter of the big picture FC layer is updated. That is, an updated model parameter is generated according to the second to-be-used training label and the second predicted label. Both the second to-be-used training label and the second predicted label are labels related to a big picture task.
Step 4. If a maximum number of frames of iterations is not reached after the processing of step 2 to step 4 is performed on each frame of image in the to-be-used training video, the updated target combined model is sent to a battle environment and the process returns to step 2. Step 5 is performed if the maximum number of frames of iterations is reached.
Step 5. A reinforced combined model obtained by the reinforcement is saved.

Further, in the embodiments of the present disclosure, some task layers in the target combined model may be further optimized through reinforcement learning. If a part of the big-picture task needs to be reinforced, the server obtains the to-be-used training video. The server then obtains the target scene data corresponding to the to-be-used training video by using the target combined model, and obtains the target model parameter through training based on the target scene data, the second to-be-used training label, and the second predicted label. Finally, the server updates the target combined model by using the target model parameter to obtain the reinforced combined model. With the foregoing method, AI capabilities may be improved by reinforcing the big picture FC layer. In addition, reinforcement learning may further overcome misoperation problems caused by various factors such as nervousness or inattention of a human, thereby greatly reducing a number of bad samples in training data, and further improving reliability of the model and accuracy of prediction using the model. The reinforcement learning method may be performed only for some scenes, to reduce the number of steps of decisions and accelerate convergence.

The following describes a server in the present disclosure in detail. Referring to FIG. 19, FIG. 19 is a schematic diagram of an embodiment of a server according to an embodiment of the present disclosure. The server 30 includes:
an obtaining module 301, configured to obtain a to-be-predicted image;
an extraction module 302, configured to extract a to-be-predicted feature set from the to-be-predicted image obtained by the obtaining module 301, the to-be-predicted feature set including a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region; and
the obtaining module 301 being further configured to obtain, by using a target combined model, a first label and a second label that correspond to the to-be-predicted feature set extracted by the extraction module 302, the first label being related to operation content, and the second label being related to an operation intention.

In this embodiment, the obtaining module 301 obtains a to-be-predicted image, and the extraction module 302 extracts a to-be-predicted feature set from the to-be-predicted image obtained by the obtaining module 301. The to-be-predicted feature set includes a first to-be-predicted feature, a second to-be-predicted feature, and a third to-be-predicted feature, the first to-be-predicted feature represents an image feature of a first region, the second to-be-predicted feature represents an image feature of a second region, the third to-be-predicted feature represents an attribute feature related to an interaction operation, and the range of the first region is smaller than the range of the second region. The obtaining module 301 obtains, by using a target combined model, a first label and a second label that correspond to the to-be-predicted feature set extracted by the extraction module 302. The first label represents a label related to operation content, and the second label represents a label related to an operation intention.

In the embodiments of the present disclosure, a server is provided. The server first obtains a to-be-predicted image, and then extracts a to-be-predicted feature set from the to-be-predicted image. The to-be-predicted feature set includes a first to-be-predicted feature, a second to-be-predicted feature, and a third to-be-predicted feature, the first to-be-predicted feature represents an image feature of a first region, the second to-be-predicted feature represents an image feature of a second region, the third to-be-predicted feature represents an attribute feature related to an interaction operation, and the range of the first region is smaller than the range of the second region. Finally, the server may obtain, by using a target combined model, a first label and a second label that correspond to the to-be-predicted image. The first label represents a label related to operation content, and the second label represents a label related to an operation intention. With the foregoing method, micro control and a big picture may be predicted by using only one combined model, where a prediction result of the micro control is represented as the first label, and a prediction result of the big picture is represented as the second label. Therefore, the big picture model and the micro control model are merged into a combined model, thereby effectively resolving a hard switching problem in a hierarchical model and improving the convenience of prediction.

Optionally, based on the embodiment corresponding to FIG. 19, in another embodiment of the server 30 of the present disclosure, the obtaining module 301 is configured to obtain, by using the target combined model, the first label, the second label, and a third label corresponding to the to-be-predicted feature set. The third label represents a label related to a result of victory or defeat.

In the embodiments of the present disclosure, the target combined model not only can output the first label and the second label, but also can output the third label, that is, the target combined model may further predict a result of victory or defeat. With the foregoing method, in an actual application, a result of a situation may be better predicted, which helps to improve the reliability of prediction and improve the flexibility and practicability of prediction.

The following describes a server in the present disclosure in detail. Referring to FIG. 20, FIG. 20 is a schematic diagram of an embodiment of a server of the present disclosure. The server 40 includes:
an obtaining module 401, configured to obtain a to-be-used training image set, the to-be-used training image set including N to-be-used training images, N being an integer greater than or equal to 1;
an extraction module 402, configured to extract a to-be-used training feature set from each to-be-used training image obtained by the obtaining module 401, the to-be-used training feature set including a first to-be-used training feature, a second to-be-used training feature, and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region;
the obtaining module 401 being configured to obtain a first to-be-used training label and a second to-be-used training label for each of the to-be-used training images, the first to-be-used training label being related to operation content, and the second to-be-used training label being related to an operation intention; and
a training module 403, configured to obtain a target combined model through training by the to-be-used training feature set that is extracted by the extraction module 402 from each to-be-used training image and the first to-be-used training label and the second to-be-used training label that are obtained by the obtaining module for each of the to-be-used training images.

In this embodiment, the obtaining module 401 obtains a to-be-used training image set. The to-be-used training image set includes N to-be-used training images, N being an integer greater than or equal to 1. The extraction module 402 extracts a to-be-used training feature set from each to-be-used training image obtained by the obtaining module 401. The to-be-used training feature set includes a first to-be-used training feature, a second to-be-used training feature, and a third to-be-used training feature. The first to-be-used training feature represents an image feature of a first region, the second to-be-used training feature represents an image feature of a second region, the third to-be-used training feature represents an attribute feature related to an interaction operation, and the range of the first region is smaller than the range of the second region. The obtaining module 401 obtains a first to-be-used training label and a second to-be-used training label for each of the to-be-used training images. The first to-be-used training label represents a label related to operation content, and the second to-be-used training label represents a label related to an operation intention. The training module 403 obtains the target combined model through training by the to-be-used training feature set extracted by the extraction module 402 from each to-be-used training image and the first to-be-used training label and the second to-be-used training label that are obtained by the obtaining module for each to-be-used training image.

In the embodiments of the present disclosure, a server is introduced. The server first obtains a to-be-used training image set, and then extracts a to-be-used training feature set from each to-be-used training image. The to-be-used training feature set includes a first to-be-used training feature, a second to-be-used training feature, and a third to-be-used training feature. The server then obtains a first to-be-used training label and a second to-be-used training label for each of the to-be-used training images, and finally obtains the target combined model through training by the to-be-used training feature set of each to-be-used training image and the first to-be-used training label and the second to-be-used training label that correspond to each to-be-used training image. With the foregoing method, a model that can predict micro control and a big picture at the same time is designed. Therefore, the big picture model and the micro control model are merged into a combined model, thereby effectively resolving a hard switching problem in a hierarchical model and improving the convenience of prediction. In addition, the consideration of the big picture task may effectively improve the accuracy of macroscopic decision making. The big picture decision is quite important in a MOBA game especially.

Optionally, based on the embodiment corresponding to FIG. 20, in another embodiment of the server 40 of the present disclosure, the first to-be-used training feature is a two-dimensional vector feature, and the first to-be-used training feature includes at least one of character position information, moving object position information, fixed object position information, and defensive object position information in the first region.

The second to-be-used training feature is a two-dimensional vector feature, and the second to-be-used training feature includes at least one of character position information, moving object position information, fixed object position information, defensive object position information, obstacle object position information, and output object position information in the second region;

The third to-be-used training feature is a one-dimensional vector feature, and the first to-be-used training feature includes at least one of a character hit point value, a character output value, time information, and score information.

The first to-be-used training feature, the second to-be-used training feature and the third to-be-used training feature correspond to each other.

In the embodiments of the present disclosure, content of the three to-be-used training features is also introduced, where the first to-be-used training feature is a two-dimensional vector feature, the second to-be-used training feature is a two-dimensional vector feature, and the third to-be-used training feature is a one-dimensional vector feature. With the foregoing method, on one hand, specific information included in the three to-be-used training features may be determined, which provides more information for model training. On the other hand, both the first to-be-used training feature and the second to-be-used training feature are two-dimensional vector features, which help to improve a spatial expression of the feature, thereby improving diversity of the feature.

Optionally, based on the embodiment corresponding to FIG. 20, in another embodiment of the server 40 of the present disclosure, the first to-be-used training label includes at least one of button type information and button parameter information; and
the button parameter information includes at least one of a direction parameter, a position parameter, and a target parameter, the direction parameter being used for representing a moving direction of a character, the position parameter being used for representing a position of the character, and the target parameter being used for representing a target of an output of the character.

In the embodiments of the present disclosure, it is described that the first to-be-used training label includes at least one of the button type information and the button parameter information, where the button parameter information includes at least one of a direction parameter, a position parameter, and a target parameter, the direction parameter being used for representing a moving direction of a character, the position parameter being used for representing a position of the character, and the target parameter being used for representing a target of an output of the character. With the foregoing method, content of the first to-be-used training label is further refined, and labels are established in a hierarchical manner, which may be closer to the real operation intention of the human player in the game process, thereby helping to improve a learning capability of AI.

Optionally, based on the embodiment corresponding to FIG. 20, in another embodiment of the server 40 of the present disclosure, the second to-be-used training label includes operation intention information and character position information.

The operation intention information represents an intention with which a character interacts with an object, and the character position information represents a position of the character in the first region.

In the embodiments of the present disclosure, it is described that the second to-be-used training label includes the operation intention information and the character position information, where the operation intention information represents an intention with which a character interacts with an object, and the character position information represents a position of the character in the first region. With the foregoing method, the big picture of the human player is reflected by the operation intention information in combination with the character position information, so that feasibility and operability of the solution are improved, because the big picture decision is quite important in a MOBA game.

Optionally, based on the embodiment corresponding to FIG. 20, in another embodiment of the server 40 of the present disclosure, the training module 403 is configured to
process the to-be-used training feature set of each to-be-used training image to obtain a target feature set, the target feature set including a first target feature, a second target feature, and a third target feature;
obtain a first predicted label and a second predicted label that correspond to the target feature set by using an LSTM layer, the first predicted label being a predicted label related to the operation content, and the second predicted label being a predicted label related to the operation intention;
obtain a model core parameter through training by the first predicted label, the first to-be-used training label, the second predicted label, and the second to-be-used training label of each to-be-used training image, both the first predicted label and the second predicted label being of predicted values, and both the first to-be-used training label and the second to-be-used training label being of actual values; and
generate the target combined model according to the model core parameter.

In the embodiments of the present disclosure, a process of obtaining the target combined model through training is provided, and the process mainly includes processing the to-be-used training feature set of each to-be-used training image to obtain the target feature set. The first predicted label and the second predicted label that correspond to the target feature set are then obtained by using the LSTM layer, and the model core parameter is obtained through training by the first predicted label, the first to-be-used training label, the second predicted label, and the second to-be-used training label of each to-be-used training image. The model core parameter is used for generating the target combined model. With the foregoing method, a problem that some visual fields are unobservable may be resolved by using the LSTM layer. That is, the LSTM layer may obtain data in a previous period of time, so that the data is more complete, which helps to make inference and decision in the process of model training.

Optionally, based on the embodiment corresponding to FIG. 20, in another embodiment of the server 40 of the present disclosure, the training module 403 is configured to
process the third to-be-used training feature of each to-be-used training image by using an FC layer to obtain the third target feature, the third target feature being a one-dimensional vector feature;
process the second to-be-used training feature of each to-be-used training image by using a convolutional layer to obtain the second target feature, the second target feature being a one-dimensional vector feature; and
process the first to-be-used training feature of each to-be-used training image by using the convolutional layer to obtain the first target feature, the first target feature being a one-dimensional vector feature.

In the embodiments of the present disclosure, the to-be-used training feature set may be further processed. That is, the first to-be-used training feature of each to-be-used training image is processed by using the FC layer to obtain the first target feature, the second to-be-used training feature of each to-be-used training image is processed by using the convolutional layer to obtain the second target feature, and the third to-be-used training feature of each to-be-used training image is processed by using the convolutional layer to obtain the third target feature. With the foregoing method, one-dimensional vector features is obtained, and concatenation processing may be performed on the vector features for subsequent model training, thereby helping to improve feasibility and operability of the solution.

Optionally, based on the embodiment corresponding to FIG. 20, in another embodiment of the server 40 of the present disclosure, the training module 403 is configured to obtain the first predicted label, the second predicted label, and a third predicted label that correspond to the target feature set by using the LSTM layer, the third predicted label being a predicted label related to a result of victory or defeat;
obtain a third to-be-used training label for each of the to-be-used training images, the third to-be-used training label being used for representing an actual result of victory or defeat; and
obtain the model core parameter through training by the first predicted label, the first to-be-used training label, the second predicted label, the second to-be-used training label, the third predicted label, and the third to-be-used training label, the third to-be-used training label being of a predicted value, and the third predicted label being of an actual value.

In the embodiments of the present disclosure, it is described that the target combined model may further be trained by a label related to a result of victory or defeat. That is, the server obtains, by using the LSTM layer, the first predicted label, the second predicted label, and the third predicted label that correspond to the target feature set, where the third predicted label represents a label that is obtained through prediction and is related to a result of victory or defeat. Then the server obtains the third to-be-used training label for each of the to-be-used training images, and finally obtains the model core parameter through training by the first predicted label, the first to-be-used training label, the second predicted label, the second to-be-used training label, the third predicted label, and the third to-be-used training label. With the foregoing method, the target combined model may further predict a winning percentage of a match. Therefore, the learning of a situation may be reinforced, thereby improving reliability and diversity of model application.

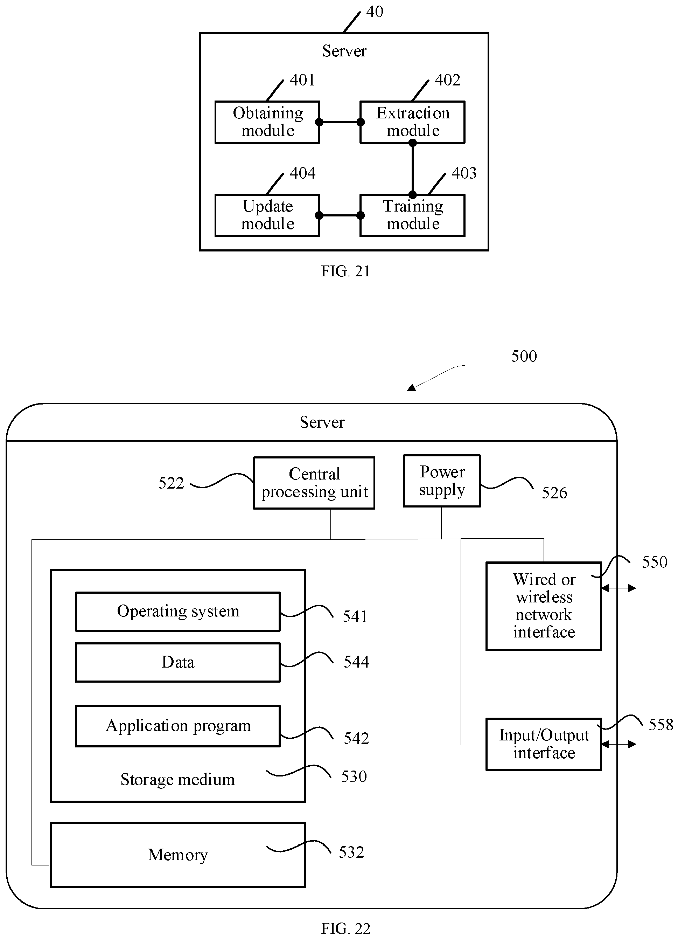

Optionally, based on the embodiment corresponding to FIG. 20, referring to FIG. 21, in another embodiment of the server 40 of the present disclosure, the server 40 further includes an update module 404.

The obtaining module 401 is further configured to obtain a to-be-used training video after the training module 403 obtains the target combined model through training by the to-be-used training feature set of each to-be-used training image and the first to-be-used training label and the second to-be-used training label that correspond to each to-be-used training image, the to-be-used training video including multiple frames of interaction images.

The obtaining module 401 is further configured to obtain target scene data corresponding to the to-be-used training video by using the target combined model, the target scene data including data of a target scene.

The training module 403 is further configured to obtain a target model parameter through training by the target scene data, the first to-be-used training label, and the first predicted label that are obtained by the obtaining module 401, the first predicted label being a predicted label related to the operation content, the first predicted label being of a predicted value, and the first to-be-used training label being of an actual value.

The update module 404 is configured to update the target combined model by using the target model parameter that is obtained by the training module 403, to obtain a reinforced combined model.

Further, in the embodiments of the present disclosure, some task layers in the target combined model may be further optimized through reinforcement learning. If a part of the micro control task needs to be reinforced, the server obtains the to-be-used training video. The server then obtains the target scene data corresponding to the to-be-used training video by using the target combined model, and obtains the target model parameter through training based on the target scene data, the first to-be-used training label, and the first predicted label. Finally, the server updates the target combined model by using the target model parameter to obtain the reinforced combined model. With the foregoing method, AI capabilities may be improved by reinforcing the micro control FC layer. In addition, reinforcement learning may further overcome misoperation problems caused by various factors such as nervousness or inattention of a human, thereby greatly reducing a number of bad samples in training data, and further improving reliability of the model and accuracy of performing prediction by using the model. The reinforcement learning method may be performed only for some scenes, to reduce the number of steps of decisions and accelerate convergence.

Optionally, based on the embodiment corresponding to FIG. 20, referring to FIG. 21 again, in another embodiment of the server 40 of the present disclosure, the server 40 further includes an update module 404.

The obtaining module 401 is further configured to obtain a to-be-used training video after the training module 403 obtains the target combined model through training by the to-be-used training feature set of each to-be-used training image and the first to-be-used training label and the second to-be-used training label that correspond to each to-be-used training image, the to-be-used training video including multiple frames of interaction images.

The obtaining module 401 is further configured to obtain target scene data corresponding to the to-be-used training video by using the target combined model, the target scene data including data of a target scene.

The training module 403 is further configured to obtain a target model parameter through training by the target scene data, the second to-be-used training label, and the second predicted label that are obtained by the obtaining module 401, the second predicted label being a predicted label related to the operation intention, the second predicted label being of a predicted value, and the second to-be-used training label being of an actual value.

The update module 404 is configured to update the target combined model by using the target model parameter that is obtained by the training module 403, to obtain a reinforced combined model.

Further, in the embodiments of the present disclosure, some task layers in the target combined model may be further optimized through reinforcement learning. If a part of the big-picture task needs to be reinforced, the server obtains the to-be-used training video. The server then obtains the target scene data corresponding to the to-be-used training video by using the target combined model, and obtains the target model parameter through training based on the target scene data, the second to-be-used training label, and the second predicted label. Finally, the server updates the target combined model by using the target model parameter to obtain the reinforced combined model. With the foregoing method, AI capabilities may be improved by reinforcing the big picture FC layer. In addition, reinforcement learning may further overcome misoperation problems caused by various factors such as nervousness or inattention of a human, thereby greatly reducing a number of bad samples in training data, and further improving reliability of the model and accuracy of performing prediction by using the model. The reinforcement learning method may be performed only for some scenes, to reduce the number of steps of decisions and accelerate convergence.

FIG. 22 is a schematic structural diagram of a server according to an embodiment of the present disclosure. The server 500 may vary greatly in configuration or performance, and may include one or more central processing units (CPU) 522 (for example, one or more processors) and a memory 532, and one or more storage media 530 (for example, one or more mass storage devices) that store application programs 542 or data 544. The memory 532 and the storage medium 530 may be temporary storage or persistent storage. A program stored in the storage medium 530 may include one or more modules (which are not marked in the figure), and each module may include a series of instruction operations on the server. Further, the CPU 522 may be set to communicate with the storage medium 530, and perform, on the server 500, the series of instruction operations in the storage medium 530.

The server 500 may further include one or more power supplies 526, one or more wired or wireless network interfaces 550, one or more input/output interfaces 558, and/or one or more operating systems 541 such as Windows Server™, Mac OS X™, Unix™, Linux™, or FreeBSD™.

The steps performed by the server in the foregoing embodiments may be based on the server structure shown in FIG. 22.

In an embodiment of the present disclosure, the CPU 522 is configured to perform the following steps:
obtaining a to-be-predicted image;
extracting a to-be-predicted feature set from the to-be-predicted image, the to-be-predicted feature set including a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region; and
obtaining, by using a target combined model, at least one of a first label corresponding to the to-be-predicted feature set and a second label corresponding to the to-be-predicted feature set, the first label being related to operation content, and the second label being related to an operation intention.

Optionally, the CPU 522 is further configured to perform the following steps:
obtaining, by using the target combined model, the first label, the second label, and a third label corresponding to the to-be-predicted feature set, the third label being related to a result of victory or defeat.

In an embodiment of the present disclosure, the CPU 522 is configured to perform the following steps:
obtaining a to-be-used training image set, the to-be-used training image set including N to-be-used training images, N being an integer greater than or equal to 1;
extracting a to-be-used training feature set from each to-be-used training image, the to-be-used training feature set including a first to-be-used training feature, a second to-be-used training feature, and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region;
obtaining a first to-be-used training label and a second to-be-used training label for each of the to-be-used training images, the first to-be-used training label being related to operation content, and the second to-be-used training label being related to an operation intention;
obtaining a target combined model through training by the to-be-used training feature set of each to-be-used training image and the first to-be-used training label and the second to-be-used training label that correspond to each to-be-used training image.

Optionally, the CPU 522 is further configured to perform the following steps:
processing the to-be-used training feature set of each to-be-used training image to obtain a target feature set, the target feature set including a first target feature, a second target feature, and a third target feature;
obtaining a first predicted label and a second predicted label that correspond to the target feature set by using an LSTM layer, the first predicted label being a predicted label related to the operation content, and the second predicted label being a predicted label related to the operation intention;
obtaining a model core parameter through training by the first predicted label, the first to-be-used training label, the second predicted label, and the second to-be-used training label of each to-be-used training image, both the first predicted label and the second predicted label being of predicted values, and both the first to-be-used training label and the second to-be-used training label being of actual values; and
generating the target combined model according to the model core parameter.

Optionally, the CPU 522 is further configured to perform the following steps:
processing the third to-be-used training feature of each to-be-used training image by using an FC layer to obtain the third target feature, the third target feature being a one-dimensional vector feature;
processing the second to-be-used training feature of each to-be-used training image by using a convolutional layer to obtain the second target feature, the second target feature being a one-dimensional vector feature; and
processing the first to-be-used training feature of each to-be-used training image by using the convolutional layer to obtain the first target feature, the first target feature being a one-dimensional vector feature.

Optionally, the CPU 522 is further configured to perform the following steps:
obtaining the first predicted label, the second predicted label, and a third predicted label that correspond to the target feature set by using the LSTM layer, the third predicted label being a predicted label related to a result of victory or defeat; and
the obtaining a model core parameter through training by the first predicted label, the first to-be-used training label, the second predicted label, and the second to-be-used training label of each to-be-used training image includes:
   obtaining a third to-be-used training label for each of the to-be-used training images, the third to-be-used training label being used for representing an actual result of victory or defeat; and
   obtaining the model core parameter through training by the first predicted label, the first to-be-used training label, the second predicted label, the second to-be-used training label, the third predicted label, and the third to-be-used training label, the third to-be-used training label being of a predicted value, and the third predicted label being of an actual value.

Optionally, the CPU 522 is further configured to perform the following steps:
obtaining a to-be-used training video, the to-be-used training video including multiple frames of interaction images;
obtaining target scene data corresponding to the to-be-used training video by using the target combined model, the target scene data including data of a target scene;
obtaining a target model parameter through training by the target scene data, the first to-be-used training label and the first predicted label, the first predicted label being a predicted label related to the operation content, the first predicted label being of a predicted value, and the first to-be-used training label being of an actual value; and
updating the target combined model by using the target model parameter, to obtain a reinforced combined model.

Optionally, the CPU 522 is further configured to perform the following steps:
obtaining a to-be-used training video, the to-be-used training video including multiple frames of interaction images;
obtaining target scene data corresponding to the to-be-used training video by using the target combined model, the target scene data including data of a target scene;
obtaining a target model parameter through training by the target scene data, the second to-be-used training label, and the second predicted label, the second predicted label being a predicted label related to the operation intention, the second predicted label being of a predicted value, and the second to-be-used training label being of an actual value; and
updating the target combined model by using the target model parameter, to obtain a reinforced combined model.

A person skilled in the art may clearly understand that, for simple and clear description, for specific work processes of the foregoing described system, apparatus, and unit, reference may be made to corresponding processes in the foregoing method embodiments, and details are not described herein again.

In some embodiments provided in the present disclosure, it is to be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented as indirect couplings or communication connections by using some interfaces, apparatuses or units, and may be implemented in electric, mechanical, or other forms.

The units described as separate components may or may not be physically separated, and the components displayed as units may or may not be physical units, that is, may be located in a same place or may be distributed over multiple network units. Some or all of the units may be selected according to actual requirements to achieve the objectives of the solutions in the embodiments.

In addition, functional units in the embodiments of the present disclosure may be integrated into one processing unit, or each of the units may exist alone physically, or two or more units are integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the essential technical solutions of the present disclosure or the part contributing to the related art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disc.

The term "plurality of' mentioned in this specification means two or more. The term "and/or" describes an association relationship between associated objects includes three relationships. For example, A and/or B may represent the following three cases: Only A exists, both A and B exist, and only B exists. The character "/" in this specification generally indicates an "or" relationship between the associated objects. The term "at least one" represents one or more.

The foregoing embodiments are merely provided for describing the technical solutions of the present disclosure, but not intended to limit the present disclosure. A person of ordinary skill in the art may understand that although the technical solutions have been described in detail with reference to the foregoing embodiments, modifications may still be made to the technical solutions described in the foregoing embodiments, or equivalent replacements may be made to some technical features in the technical solutions. Such modifications or replacements do not cause the essence of corresponding technical solutions to depart from the spirit and scope of the technical solutions of the embodiments of the present disclosure.

## Claims

1. An information prediction method, applicable to a server, the method comprising:
obtaining a to-be-predicted image;
extracting a to-be-predicted feature set from the to-be-predicted image, the to-be-predicted feature set comprising a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region; and
obtaining, by using a target combined model, at least one of a first label corresponding to the to-be-predicted feature set and a second label corresponding to the to-be-predicted feature set, the first label being related to operation content, and the second label being related to an operation intention.

2. The method according to claim 1, wherein the obtaining, by using a target combined model, at least one of a first label corresponding to the to-be-predicted feature set and a second label corresponding to the to-be-predicted feature set comprises:
obtaining, by using the target combined model, a third label corresponding to the to-be-predicted feature set, and the at least one of the first label and the second label, the third label being related to a result of victory or defeat.

3. A model training method, applicable to a server, the method comprising:
obtaining a to-be-used training image set, the to-be-used training image set comprising N to-be-used training images, N being an integer greater than or equal to 1;
extracting a to-be-used training feature set from each of the to-be-used training images, the to-be-used training feature set comprising a first to-be-used training feature, a second to-be-used training feature and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region;
obtaining a first to-be-used training label and a second to-be-used training label for each of the to-be-used training images, the first to-be-used training label being related to operation content, and the second to-be-used training label being related to an operation intention; and
obtaining a target combined model through training by the to-be-used training feature set of each of the to-be-used training images and the first to-be-used training label and the second to-be-used training label that correspond to each of the to-be-used training images.

4. The method according to claim 3, wherein
the first to-be-used training feature is a two-dimensional vector feature, and the first to-be-used training feature comprises at least one of character position information, moving object position information, fixed object position information, and defensive object position information in the first region;
the second to-be-used training feature is a two-dimensional vector feature, and the second to-be-used training feature comprises at least one of character position information, moving object position information, fixed object position information, defensive object position information, obstacle object position information, and output object position information in the second region;
the third to-be-used training feature is a one-dimensional vector feature, and the first to-be-used training feature comprises at least one of a character hit point value, a character output value, time information, and score information; and
the first to-be-used training feature, the second to-be-used training feature, and the third to-be-used training feature correspond to each other.

5. The method according to claim 3, wherein
the first to-be-used training label comprises at least one of button type information and button parameter information; and
the button parameter information comprises at least one of a direction parameter, a position parameter, and a target parameter, the direction parameter being used for representing a moving direction of a character, the position parameter being used for representing a position of the character, and the target parameter being used for representing a target of an output of the character.

6. The method according to claim 3, wherein
the second to-be-used training label comprises operation intention information and character position information; and
the operation intention information represents an intention with which a character interacts with an object, and the character position information represents a position of the character in the first region.

7. The method according to claim 3, wherein the obtaining a target combined model through training by the to-be-used training feature set of each of the to-be-used training images and the first to-be-used training label and the second to-be-used training label that correspond to each of the to-be-used training images comprises:
processing the to-be-used training feature set of each of the to-be-used training images to obtain a target feature set, the target feature set comprising a first target feature, a second target feature and a third target feature;
obtaining a first predicted label and a second predicted label that correspond to the target feature set by using a long short-term memory, LSTM, layer, the first predicted label being a predicted label related to the operation content, and the second predicted label being a predicted label related to the operation intention;
obtaining a model core parameter through training by the first predicted label, the first to-be-used training label, the second predicted label and the second to-be-used training label of each of the to-be-used training images, both the first predicted label and the second predicted label being of predicted values, and both the first to-be-used training label and the second to-be-used training label being of actual values; and
generating the target combined model according to the model core parameter.

8. The method according to claim 7, wherein the processing the to-be-used training feature set of each of the to-be-used training images to obtain a target feature set comprises:
processing the third to-be-used training feature of each of the to-be-used training images by using a fully connected layer to obtain the third target feature, the third target feature being a one-dimensional vector feature;
processing the second to-be-used training feature of each of the to-be-used training images by using a convolutional layer to obtain the second target feature, the second target feature being a one-dimensional vector feature; and
processing the first to-be-used training feature of each of the to-be-used training images by using the convolutional layer to obtain the first target feature, the first target feature being a one-dimensional vector feature.

9. The method according to claim 7, wherein the obtaining a first predicted label and a second predicted label that correspond to the target feature set by using an LSTM layer comprises:
obtaining the first predicted label, the second predicted label and a third predicted label that correspond to the target feature set by using the LSTM layer, the third predicted label being a predicted label related to a result of victory or defeat; and
the obtaining a model core parameter through training by the first predicted label, the first to-be-used training label, the second predicted label, and the second to-be-used training label of each of the to-be-used training images comprises:
obtaining a third to-be-used training label for each of the to-be-used training images, the third to-be-used training label being used for representing an actual result of victory or defeat; and
obtaining the model core parameter through training by the first predicted label, the first to-be-used training label, the second predicted label, the second to-be-used training label, the third predicted label and the third to-be-used training label, the third to-be-used training label being of a predicted value, and the third predicted label being of an actual value.

10. The method according to any one of claims 3 to 9, wherein after the obtaining a target combined model through training by the to-be-used training feature set of each of the to-be-used training images and the first to-be-used training label and the second to-be-used training label that correspond to each of the to-be-used training images, the method further comprises:
obtaining a to-be-used training video, the to-be-used training video comprising a plurality of frames of interaction images;
obtaining target scene data corresponding to the to-be-used training video by using the target combined model, the target scene data comprising data of a target scene;
obtaining a target model parameter through training by the target scene data, the first to-be-used training label and the first predicted label, the first predicted label being a predicted label related to the operation content, the first predicted label being of a predicted value, and the first to-be-used training label being of an actual value; and
updating the target combined model by using the target model parameter, to obtain a reinforced combined model.

11. The method according to any one of claims 3 to 9, wherein after the obtaining a target combined model through training by the to-be-used training feature set of each of the to-be-used training images and the first to-be-used training label and the second to-be-used training label that correspond to each of the to-be-used training images, the method further comprises:
obtaining a to-be-used training video, the to-be-used training video comprising a plurality of frames of interaction images;
obtaining target scene data corresponding to the to-be-used training video by using the target combined model, the target scene data comprising data of a target scene;
obtaining a target model parameter through training by the target scene data, the second to-be-used training label and the second predicted label, the second predicted label being a predicted label related to the operation intention, the second predicted label being of a predicted value, and the second to-be-used training label being of an actual value; and
updating the target combined model by using the target model parameter, to obtain a reinforced combined model.

12. A server, comprising:
an obtaining module, configured to obtain a to-be-predicted image; and
an extraction module, configured to extract a to-be-predicted feature set from the to-be-predicted image obtained by the obtaining module, the to-be-predicted feature set comprising a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region,
the obtaining module being further configured to obtain, by using a target combined model, a first label and a second label that correspond to the to-be-predicted feature set extracted by the extraction module, the first label being related to operation content, and the second label being related to an operation intention.

13. A server, comprising:
an obtaining module, configured to obtain a to-be-used training image set, the to-be-used training image set comprising N to-be-used training images, N being an integer greater than or equal to 1;
an extraction module, configured to extract a to-be-used training feature set from each of the to-be-used training images obtained by the obtaining module, the to-be-used training feature set comprising a first to-be-used training feature, a second to-be-used training feature, and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region,
the obtaining module being configured to obtain a first to-be-used training label and a second to-be-used training label for each of the to-be-used training images, the first to-be-used training label being related to operation content, and the second to-be-used training label being related to an operation intention; and
a training module, configured to obtain a target combined model through training by the to-be-used training feature set extracted by the extraction module from each of the to-be-used training images and the first to-be-used training label and the second to-be-used training label that are obtained by the obtaining module for each of the to-be-used training images.

14. A server, comprising a memory, a transceiver, a processor, and a bus system,
the memory being configured to store a program;
the processor being configured to execute the program in the memory, to perform the following operations:
obtaining a to-be-predicted image;
extracting a to-be-predicted feature set from the to-be-predicted image, the to-be-predicted feature set comprising a first to-be-predicted feature, a second to-be-predicted feature, and a third to-be-predicted feature, the first to-be-predicted feature being an image feature of a first region, the second to-be-predicted feature being an image feature of a second region, the third to-be-predicted feature being an attribute feature related to an interaction operation, and the range of the first region being smaller than the range of the second region;
obtaining, by using a target combined model, at least one of a first label corresponding to the to-be-predicted feature set and a second label corresponding to the to-be-predicted feature set, the first label being related to operation content, and the second label being related to an operation intention; and
the bus system being configured to connect the memory and the processor, to enable communication between the memory and the processor.

15. The server according to claim 14, wherein the processor is configured to perform the following operation:
obtaining, by using the target combined model, a third label corresponding to the to-be-predicted feature set, and the at least one of the first label and the second label, the third label being related to a result of victory or defeat.

16. A server, comprising a memory, a transceiver, a processor, and a bus system,
the memory being configured to store a program;
the processor being configured to execute the program in the memory, to perform the following operations:
obtaining a to-be-used training image set, the to-be-used training image set comprising N to-be-used training images, N being an integer greater than or equal to 1;
extracting a to-be-used training feature set from each of the to-be-used training images, the to-be-used training feature set comprising a first to-be-used training feature, a second to-be-used training feature and a third to-be-used training feature, the first to-be-used training feature being an image feature of a first region, the second to-be-used training feature being an image feature of a second region, the third to-be-used training feature being an attribute feature related to an interaction operation, and the range of the first region being smaller than the range of the second region;
obtaining a first to-be-used training label and a second to-be-used training label for each of the to-be-used training images, the first to-be-used training label being related to operation content, and the second to-be-used training label being related to an operation intention; and
obtaining a target combined model through training by the to-be-used training feature set of each of the to-be-used training images and the first to-be-used training label and the second to-be-used training label that correspond to each of the to-be-used training images; and
the bus system being configured to connect the memory and the processor, to enable communication between the memory and the processor.

17. The server according to claim 16, wherein the processor is configured to perform the following operations:
processing the to-be-used training feature set of each of the to-be-used training images to obtain a target feature set, the target feature set comprising a first target feature, a second target feature and a third target feature;
obtaining a first predicted label and a second predicted label that correspond to the target feature set by using a long short-term memory, LSTM, layer, the first predicted label being a predicted label related to the operation content, and the second predicted label being a predicted label related to the operation intention;
obtaining a model core parameter through training by the first predicted label, the first to-be-used training label, the second predicted label and the second to-be-used training label of each to-be-used training image, both the first predicted label and the second predicted label being of predicted values, and both the first to-be-used training label and the second to-be-used training label being of actual values; and
generating the target combined model according to the model core parameter.

18. The server according to claim 17, wherein the processor is configured to perform the following operations:
processing the third to-be-used training feature of each of the to-be-used training images by using a fully connected layer to obtain the third target feature, the third target feature being a one-dimensional vector feature;
processing the second to-be-used training feature of each of the to-be-used training images by using a convolutional layer to obtain the second target feature, the second target feature being a one-dimensional vector feature; and
processing the first to-be-used training feature of each of the to-be-used training images by using the convolutional layer to obtain the first target feature, the first target feature being a one-dimensional vector feature.

19. The server according to claim 17, wherein the processor is configured to perform the following operations:
obtaining the first predicted label, the second predicted label and a third predicted label that correspond to the target feature set by using the LSTM layer, the third predicted label being a predicted label related to a result of victory or defeat; and
the obtaining a model core parameter through training by the first predicted label, the first to-be-used training label, the second predicted label, and the second to-be-used training label of each of the to-be-used training images comprises:
obtaining a third to-be-used training label for each of the to-be-used training images, the third to-be-used training label being used for representing an actual result of victory or defeat; and
obtaining the model core parameter through training by the first predicted label, the first to-be-used training label, the second predicted label, the second to-be-used training label, the third predicted label and the third to-be-used training label, the third to-be-used training label being of a predicted value, and the third predicted label being of an actual value.

20. The server according to any one of claims 16 to 19, wherein the processor is configured to perform the following operations:
obtaining a to-be-used training video, the to-be-used training video comprising a plurality of frames of interaction images;
obtaining target scene data corresponding to the to-be-used training video by using the target combined model, the target scene data comprising data of a target scene;
obtaining a target model parameter through training by the target scene data, the first to-be-used training label and the first predicted label, the first predicted label being a predicted label related to the operation content, the first predicted label being of a predicted value, and the first to-be-used training label being of an actual value; and
updating the target combined model by using the target model parameter, to obtain a reinforced combined model.

21. The server according to any one of claims 16 to 19, wherein the processor is configured to perform the following operations:
obtaining a to-be-used training video, the to-be-used training video comprising a plurality of frames of interaction images;
obtaining target scene data corresponding to the to-be-used training video by using the target combined model, the target scene data comprising data of a target scene;
obtaining a target model parameter through training by the target scene data, the second to-be-used training label, and the second predicted label, the second predicted label being a predicted label related to the operation intention, the second predicted label being of a predicted value, and the second to-be-used training label being of an actual value; and
updating the target combined model by using the target model parameter, to obtain a reinforced combined model.

22. A computer-readable storage medium, storing at least one instruction, the at least one instruction, when executed, implementing the information prediction method according to claim 1 or 2.

23. A computer-readable storage medium, storing at least one instruction, the at least one instruction, when executed, implementing the model training method according to any one of claims 3 to 11.

24. A computer program product, the computer program product comprising computer program code, the computer program code, when executed by a computer, causing the computer to perform the information prediction method according to claim 1 or 2.

25. A computer program product, the computer program product comprising computer program code, the computer program code, when executed by a computer, causing the computer to perform the model training method according to any one of claims 3 to 11.
